# EUROPÄISCHE PATENTSCHRIFT

(11) **EP 3 587 157 B1**
(45) Veröffentlichungstag und Bekanntmachung des Hinweises auf die Patenterteilung: **02.06.2021**
(21) Anmeldenummer: 19183053.8
(22) Anmeldetag: 27.06.2019
(51) Int. Cl.: B60K 1/00, B60K 1/02, B60K 7/00, B60K 17/04

(54) **BAURAUMANORDNUNG EINES KFZ-ANTRIEBSSTRANGS, INSBESONDERE MIT ZWEI ELEKTROMOTOREN**
STRUCTURAL SPACE ARRANGEMENT OF A MOTOR VEHICLE DRIVE TRAIN, ESPECIALLY WITH TWO ELECTRIC MOTORS
AGENCEMENT D'ESPACE DE MONTAGE D'UNE CHAÎNE CINÉMATIQUE D'UN VÉHICULE AUTOMOBILE, EN PARTICULIER POURVUE DE DEUX MOTEURS ÉLECTRIQUES

(30) Priorität: 27.06.2018 DE 202018103672 U
(43) Veröffentlichungstag der Anmeldung: 01.01.2020
(73) Patentinhaber: hofer powertrain innovation GmbH, 85748 Garching bei München (DE)
(72) Erfinder: Schneider, Severin, 78144 Tennenbronn (DE); Dorner, Dennis, 70191 Stuttgart (DE); Péteri, Szabolcs, 73655 Plüderhausen (DE)
(74) Vertreter: Cremer, Christian

(56) Entgegenhaltungen:
- WO-A1-2017/211793
- DE-A1-102010 010 438
- US-A1- 2005 023 053
- US-A1- 2017 320 382

## Beschreibung

Die vorliegende Erfindung behandelt einen Antriebsstrang für ein Kraftfahrzeug und seine Bauform, insbesondere mit elektromotorischen Antriebsquellen.

Mit anderen Worten, die vorliegende Erfindung behandelt ein Antriebsaggregat nach dem Oberbegriff von Anspruch 1.

### Technisches Gebiet

Elektrisch angetriebene Kraftfahrzeuge können auf unterschiedlichsten Antriebssträngen basieren. Markante Unterschiede zwischen den Typen der Antriebsstränge ergeben sich z. B. durch die Anzahl der Elektromotoren und z. B. durch die Anzahl der Kfz-Räder, auf die jeder Elektromotor wirkt.

In einer Ausgestaltung eines Antriebstrangs gibt es mehrere Elektromotoren in dem Fahrzeug als Antriebsquellen. Das elektromotorisch angetriebene Fahrzeug hat einen Einzelradantrieb. Der Einzelradantrieb treibt jeweils ein Rad an einer der beiden Wellen eines Personenkraftwagens an. Mit zwei Motoren werden also beide Räder einer Achse des Wagens angetrieben. Der Motor dreht in der Regel schneller als die Straßenräder drehen sollen. Die Rotation jedes der Elektromotoren wird daher über ein Übersetzungsgetriebe in das Langsame reduziert. Das Übersetzungsgetriebe treibt eine Halbachse einer Hinterachse oder einer Vorderachse an. Die beiden Motoren, je ein Motor pro Halbachse, und die beiden Getriebe, je ein Getriebe pro Elektromotor, können in einem (Gesamt-)Gehäuse zusammengefasst werden. Hierbei ist es auch möglich, einzelne Bauteile für beide Getriebe und/oder Antriebsstrecken gleichermaßen vorzusehen (im Sinne einer Bauteilereduktion), z. B. durch die Verwendung eines gemeinsamen Gehäuses für beide Getriebe.

Ein Beispiel einer entsprechenden Antriebseinheit wird in der WO 2010/021 413 A2 (Anmelderinnen: Aisin AW Co., Ltd.; Toyota Jidosha Kabushiki Kaisha; Prioritätstag: 22.08.2008) vorgestellt.

Ein Hindernis, dass ein solcher Antriebsstrang als Antrieb eines leistungsstarken Elektrofahrzeugs Anwendung finden kann, lässt sich besonders eingängig aus den Figuren der WO 2010/021 413 A2 herauslesen. So ist aus den Figuren abzuleiten, dass die maximal zur Verfügung stehenden Bautiefen für die beiden Elektromotoren begrenzt ist. Die maximal zur Verfügung stehende Breite des Kraftfahrzeugs begrenzt den Bauraum, der zwischen den Längsträgern sitzt.

### Stand der Technik

Aus dem Bereich des Lastkraftwagenbaus, bei dem üblicherweise das Fahrzeug auf einem Leiterrahmen aufgebaut wird, ist z. B. aufgrund der GB 2 551 114 A (Anmelderin: Arival Ltd.; Veröffentlichungstag: 13.12.2017) bekannt, dass zwei Elektromotoren in ihren Gehäusen so nebeneinander angeordnet werden können, dass zwischen den Motoren eine Abtriebsachse platziert werden kann. Die gesamte Einheit wird als Antriebseinheit bezeichnet und ist zwischen den Rahmenlängsträgern des Leiterrahmens anzuordnen. Die in der englischen Patentanmeldung GB 2 551 114 A vorgestellten Gehäuseformen brauchen nicht in Bezug auf Bauraum optimiert zu sein, weil zwischen den Rahmenlängsträgern eines Lastkraftwagens in der Regel ein ausreichender Bauraum zur Verfügung steht.

Die US 1 251 749 A (Erfinder: R. Cilley; Patentveröffentlichungstag: 01.01.1918) beschreibt eine Antriebsanordnung für einen Lastkraftwagen, bei der zwei elektrische Motoren nebeneinander, aber nicht zueinander überdeckend platziert sind.

Wie jedem Kfz-Mechaniker bewusst ist, sind die Platzverhältnisse zwischen den Bauteilen und Kfz-Komponenten, die noch am Anfang des zwanzigsten Jahrhunderts in damaligen Kraftfahrzeugen zu finden waren, vor allem in den letzten Jahrzehnten zunehmend enger geworden. Zur Platzierung einzelner Antriebsstrangkomponenten finden Konstrukteure bei neueren Fahrzeugen ungewöhnlichere Bauraumsituationen vor, die im Zuge von Hybridantriebssträngen für Kraftfahrzeuge eine weitere Verschärfung erfahren. Nichtsdestotrotz werden immer wieder Druckschriften veröffentlicht, die die Problematik des sich immer weiter schließenden und durch andere Komponenten stärker ausgefüllten Bauraums nicht als gegeben ansehen.

Aus der US 2017/320 382 A1 (Anmelderin: Bluegentech LLC; Veröffentlichungstag: 09.11.2017) gehen zwei unabhängige Antriebssysteme, jeweils mit einem Elektromotor und einem Getriebe hervor. Die Antriebssysteme für zwei Räder sollen in einem gemeinsamen Gehäuse angeordnet sein. Die Getriebezüge bzw. die Zahnradgetriebe würden sich dabei zumindest teilweise zwischen den Motoren befinden. Außerdem wird ein wenigstens teilweiser Überlapp der Getriebezüge zweier Getriebe in einer lateralen Richtung vorgeschlagen. Zum Antrieb einer Zugmaschine mit sechs angetriebenen Rädern kämen Elektromotoren von 100 PS (ca. 74 kW) bis 400 PS (ca. 294 kW) zum Einsatz, die nach den Reduktionsgetrieben insgesamt 86.000 ft. Ibs. (ca. 116.600 Nm) Drehmoment liefern sollen. Die Energie käme aus einem flüssiggekühlten 320 kWh Lithiumionenbatterie-Pack mit mehr als 30.000 Zellen. Die Getriebe können jeweils einen Schaltmechanismus aufweisen. Durch das Antriebssystem sollen Differentiale überflüssig werden. Die Autoren der US 2017/320 382 A1 widmen sich auch recht ausführlich dem zusätzlichen Thema "Achsaufhängungen".

In der DE 10 2016 218 717 B3 (Patentinhaberin: Audi AG; Patentveröffentlichungstag: 22.02.2018) werden weitere Anordnungen von zwei Elektromaschinen als Antriebsaggregate für ein elektrisch angetriebenes Fahrzeug zeichnerisch vorgestellt. Die Elektromaschinen sind über Kupplungen, die in der Druckschrift als Schaltelemente bezeichnet werden, auf ein gemeinsames Differential geführt. Es gibt einen Schaltzustand, bei dem ein erstes und ein zweites Schaltelement geschlossen sind, wodurch das in beiden Elektromaschinen erzeugte Antriebsmoment über das erste Schaltelement und das zweite Schaltelement direkt auf Flanschwellen der Fahrzeugräder abgetrieben werden kann.

Auch die in der DE 10 2016 218 717 B3 dargestellten Elektromaschinenanordnungen scheinen von einem ausreichend bemessenen Bauraum auszugehen.

Aus der US 2003/100 395 A1 (Anmelder: Kazuyoshi Hiraiwa; Veröffentlichungstag: 29.05.2003) geht ein Hybrid-Antriebsstrang hervor, der einen Verbrennungsmotor, zwei Motor-Generator-Einheiten und zwei durch Bremsen schaltbare Planetengetriebesätze aufweist, von denen ein erstes Planetengetriebe eine Untersetzung und ein zweites Planetengetriebe einen "Overdrive" bieten sollen. Die Elektromaschinen liegen in Nebenzweigen des Getriebes, das die Ausgangswelle hat. Der in der US 2003/100 395 A1 gezeigte motorische Antrieb ist so gestaltet, dass er zugleich auf mehrere Räder wirken können soll.

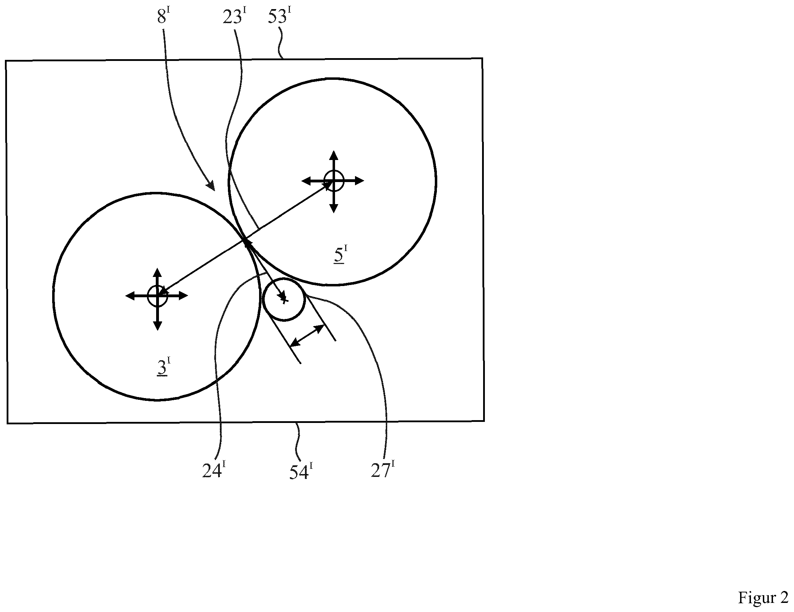

In der US 6 978 853 B2 (Patentinhaberin: ArvinMeritor Technology LLC; Patentveröffentlichungstag: 27.12.2005; Offenlegung am 03.02.2005 als US 2005/0 023 053 A1) werden Aspekte zur Anordnung der Radantriebswellen, der Gehäuseausgestaltung und der relativen Lage der Komponenten zueinander unterhalb eines Leiterrahmens eines Lastkraftwagen beschrieben. Es soll - je nach Ausführungsbeispiel - entweder nur ein elektrischer Motor oder es sollen mehrere elektrische Motoren als Antriebe in einem Mehrachsenfahrzeug angeordnet werden, um bestimmte Räder, die zu einer Achsenanordnung gehören, anzutreiben. Der Antrieb operiert mit einer summarischen Antriebsmomentenüberlagerung mithilfe eines Planetengetriebes. Es wird eine erste Getriebestufe in Gestalt einer Stirnradanordnung beschrieben, die je von einem elektrischen Motor angetrieben wird, wobei der Ausgang jener Stufe ein Sonnenrad sein soll. Als zweite Reduktionsstufe wird ein Planetengetriebe vorgeschlagen, wobei der Planetenträger dieser Stufe eine dritte Stufe antreibt, die ein Differential umfasst. Gemäß Figur 2 sollen von einer solchen Getriebeanordnung eine erste Achswelle und eine zweite Achswelle angetrieben werden, die sich in einem gemeinsamen Achsgehäuse befinden.

Die DE 10 2015 104 989 A1 (Anmelderin: Dipl.-Ingenieure Rainer & Oliver PULS GmbH; Offenlegungstag: 06.10.2016) setzt sich schwerpunktmäßig mit der Anordnung von bis zu vier Elektroantriebsmaschinen in einem Elektro-Automobilrennsport-Wagen auseinander. Der Elektromotor, der Encoder, das Getriebe und das Abtriebselement sollen sich koaxial auf einer gemeinsamen Achse befinden. Die Achsen der Antriebseinheiten sollen jeweils schräg bezüglich jener gemeinsamen Achslinie angeordnet sein. Zwar wird von der Möglichkeit des Einsatzes von Planetengetrieben gesprochen, wie aber die Momente konkret über das Planetengetriebe zu leiten sind, wird in der DE 10 2015 104 989 A1 nicht weiter ausgeführt.

Die Patentanmeldung DE 10 2010 010 438 A1 (Anmelderin: Dr. Ing. h.c. F. Porsche AG; Offenlegungstag: 01.09.2011) beschreibt in einem einzigen Ausführungsbeispiel die E-Achse eines hybridisierten Fahrzeuges, bei dem eine Achse des Fahrzeugs verbrennungsmotorisch und eine Achse des Fahrzeugs elektromotorisch angetrieben sein sollen. Die Antriebsanordnung ist für einen Sportwagen ausgelegt. Jedes Vorderrad hat eine eigene elektrische Maschine. Hierbei wird davon gesprochen, dass bezüglich der elektrischen Maschinen eine Überlappung soweit erfolgen kann, dass diese bis zum Untersetzungsgetriebe der anderen elektrischen Maschine reicht. Die elektrischen Maschinen sollen parallel und nahe beieinander angeordnet sein, d. h., es sollen möglichst lange und schmale elektrische Maschinen zum Einsatz kommen. Diese Maschinen können mithilfe einer Kupplung von einem Reduktionsgetriebemechanismus abgekoppelt werden. Um die für das Fahrzeug gewünschte Einzelradaufhängung zu erreichen, wird vorgeschlagen, eine Portalachse mit ihren Portalachsenabschnitten durch Anbindung der jeweiligen Gelenkwellen einzelradaufhängend zu machen und mit schwingungsgedämpften Haltern am Fahrwerksträger zu befestigen. In der Figur 2 der DE 10 2010 010 438 A1 ist die Gestaltung der Planetengetriebeanordnung ausgangsseitig des Elektromotors anhand von Symbolen dargestellt. Das Hohlrad des Planetengetriebes ist als ein an einem Gehäuse ortsfestes Hohlrad skizziert. Die Einleitung eines Abtriebsmoments erfolgt über die Sonne des Planetengetriebes und die Ausleitung des Moments erfolgt über die Stege des Planetengetriebes. Das von der jeweiligen Elektromaschine abgegebene Moment fließt über das Planetengetriebe und ein untersetzendes Stirnradgetriebe zur Überbrückung des radialen Versatzes zwischen der elektrischen Achse und einer Achse der Radaufhängung und kann hierbei für die Weiterleitung auf das Rad vervielfacht werden. Der Stator der jeweiligen elektrischen Maschine soll im Gehäuse der dazugehörigen Portalachsensektion drehfest montiert sein.

Die ebenfalls aus dem Hause Dr.-Ing. h.c. F. Porsche AG stammende DE 10 2010 017 966 A1 (Offenlegungstag: 17.10.2011) beschreibt ein Fahrzeug mit einem elektrischen Antrieb, bei dem zwei elektrische Maschinen nebeneinander oder übereinander angeordnet sein sollen. Im Bereich von deren einander abgewandten Enden sind diese elektrischen Maschinen über Stirnrad- und/oder Planetengetriebe über eine Gelenkwelle mit einem jeweils zugeordneten Rad verbunden.

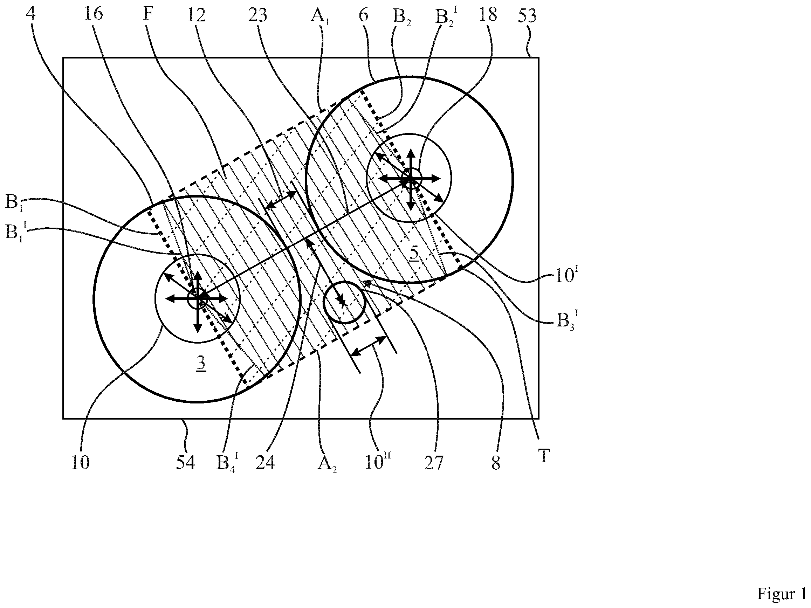

Die ohne Offenlegungsschrift nachveröffentlichte Patentschrift DE 10 2017 123 250 B3 (Patentinhaberin: Schaeffler Technologies AG & Co. KG; Veröffentlichungstag: 13.12.2018) erinnert in Teilen an die DE 10 2010 010 438 A1. Die DE 10 2017 123 250 B3 legt einen Schwerpunkt auf die Statoranordnungen der elektromechanischen Antriebseinheit. Die Figuren Figur 1 und Figur 2 der DE 10 2017 123 250 B3 zeigen einen Achsantrieb aus zwei verschiedenen Blickrichtungen. Die Figur 1 stellt die Anordnung der beiden Elektromotoren zusammen mit einem zum Elektromotor gehörenden Getriebe zwischen Rädern einer Achse von oben dar. Figur 2 soll die Antriebseinheit inklusive der darin angeschlossenen Radwellen und Räder von hinten zeigen. Demnach soll der Antrieb bis in einen Randbereich (des nicht dargestellten Fahrzeugs) hineinragen. Das Gehäuse soll so ausgeführt sein, dass es für eine Montage mit der Fahrzeugkarosserie an einem Randbereich gestaltet ist. Montagestellen und Befestigungspunkte zwischen Fahrzeugkarosserie und Antriebseinheit sind nicht beschrieben. Ein entsprechendes Hinterachsantriebsmodul kann über Elastomerlager mit der Fahrzeugkarosserie gekoppelt werden. Die Konstruktion soll eine Verbindung mit einer Hinterachse der sog. De-Dion-Bauform ermöglichen. Daher wird zu den Rotorachsen ausgeführt, dass diese gegenüber einer Fahrbahnebene leicht angestellt auszuführen seien.

Die internationale Patentanmeldung WO 2017/211 793 A1 (Anmelderin: Punch Powertrain N.V.; internationaler Veröffentlichungstag: 14.12.2017) beschreibt einen Antriebsstrang, der ein erstes Antriebsstrangmodul aufweist, bei dem eine erste Rotationsmaschine, z. B. eine elektrische Maschine, ein Drehmoment über ein in einem ersten Gehäuse sitzendes erstes Getriebe einer ersten Ausgangswelle zuführt. Ein entsprechendes zweites Modul, das ein zweites Getriebegehäuse umfasst, liefert ein Drehmoment für eine zweite Ausgangswelle, deren Ausgangsrichtung entgegengesetzt zu einer Ausgangsrichtung der ersten Ausgangswelle ist. Als Referenz wird eine Ausgangsachse definiert, auf der die Module für den Antrieb von einem Paar gegenüberliegender Fahrzeugräder angeordnet sein sollen. Es wird von einer Anordnung der Rotationsmaschinen voreinander ausgegangen, die jeweils parallel und zueinander versetzt verlaufende Rotationsachsen aufweisen. Die Position der Maschinen kann anhand ihrer Axialpositionen auf ihren Rotationsachsen bzw. auf einer Zentralachse des Antriebsstrangs vorgegeben sein und bei dieser Betrachtung wenigstens teilweise überlappend sein. Zum Aufbau der Rotationsmaschinen gibt es jedoch keine Erklärungen. Im Vergleich mit einer maximal zur Verfügung stehenden Fahrzeugbreite kann die Summe der Breiten der Rotationsmaschinen entlang ihrer Rotationsachsen größer sein. Als besonders vorteilhaft wird eine punktgespiegelte Anordnung von zwei baugleichen Modulen angesehen. Außerdem wird eine Dreieckskonfiguration für die beiden Motoren-Rotationsachsen und für die Zentralachse bzw. für die Ausgangsachse vorgeschlagen. Das Getriebe ist ein Stirnradgetriebe, das z. B. vier Zahnräder aufweisen kann. Eine Getriebeausgangsseite ist für ein Kämmen der Ausgangswelle ausgestaltet, die über ein als "homo-kinetic joint" bezeichnetes Gelenk mit dem Rad verbunden ist.

Allgemein bekannte Zusammenhänge zwischen elektrisch angetriebenen Fahrzeugen, Elektromotoren hierfür, Getriebe hierfür und sich daraus zusammensetzende Antriebsstränge sind den zuvor genannten Druckschriften entnehmbar und müssen daher nicht weiter erörtert werden, sondern durch Verweis auf die Druckschriften dürfen diese Zusammenhänge als ebenfalls definiert für vorliegende Erfindung angesehen werden.

### Technische Aufgabe

In elektromotorisch angetriebenen Kraftwagen, insbesondere in solchen, die die Erscheinungsform eines Straßensportwagens zur Nutzung als Personenkraftwagen haben, sind die Platzverhältnisse deutlich enger und beschränkter im Vergleich mit jenen, die z. B. im Nutzfahrzeugbau oder bei Luxuspersonenkraftwagen zur Verfügung stehen. Auf Grund der besonderen Fahreigenschaften, wie z. B. der Möglichkeit einer elektrisch gesteuerten Drehmomentenvektorierung auf die Antriebsräder, sind Einzelradantriebskonzepte vielversprechende Ansätze.

Im Moment dominiert aufgrund der nicht ausreichenden Akkumulatorenspeicherdichte die Forderung, ein möglichst großes Volumen für die Akkumulatoren eines Kraftfahrzeugs zur Verfügung zu stellen. Damit sinkt aber das zur Verfügung stehende Volumen für die weiteren Komponenten des Antriebsstrangs, wie z. B. für die Elektromaschinen.

Soll ein entsprechend starker elektromotorisch antreibbarer Antriebsstrang in einem kompakten Wagen, wie einem Sportwagen, verbaut werden, so stellt es eine besondere Herausforderung für die Konstruktionsingenieure da, alle Komponenten des Antriebsstrangs in dem ihnen zur Verfügung gestellten Bauraum zu platzieren.

### Erfindungsbeschreibung

Die erfindungsgemäße Aufgabe wird durch die Bauform eines Antriebsstrangs nach Anspruch 1 gelöst. Vorteilhafte Weiterbildungen lassen sich den abhängigen Ansprüchen entnehmen.

Das Antriebsaggregat setzt sich aus zwei getrennt betreibbaren Motoren zusammen, wobei die Antriebsleistung von einem Motor insbesondere auf jeweils ein Straßenrad gebracht werden kann. Eine solche Antriebsvariante kann auch als Einzelradantrieb bezeichnet werden, weil jedes Rad, das mit einem Antrieb ausgestattet ist, - zumindest in einer Ausgestaltung oder in einem Betriebs- bzw. Schaltzustand - individuell antreibbar ist. Besonders vorteilhaft ist es, wenn es dann darüber hinaus einen Schaltzustand gibt, in dem die betriebene(n) Elektromaschine(n) eine gesamte Achse eines Kraftfahrzeugs antreibt/antreiben. Gibt es wechselbare Kupplungsarten oder Schaltzustände für die Elektromaschinen bzw. die nachgeschalteten Getriebe, so kann zwischen einem Einzelradantrieb und einem Achsantrieb, insbesondere bedarfsabhängig, gewechselt werden.

Jeder Motor hat einen elektrischen Bereich, z. B. den Wicklungsbereich. Dieser Bereich, in dem ein Motor seine Wicklungen hat, ist ein wesentlicher Teil der Elektromaschine. Die Bereiche aus zwei Elektromaschinen können zueinander in Beziehung gesetzt werden. Die Bereiche, die an sich eigentlich im Inneren der jeweiligen Maschine liegen und somit abgeschlossen sind, können als zueinander deckend oder überlappend bezeichnet werden, wenn der eine Bereich in den anderen führen würde, sofern der Bereich der einen Elektromaschine fortgesetzt werden würde in Richtung auf die andere Maschine. Es kann ein Gesamtbereich geschaffen werden, in dem die einzelnen Bereiche, z. B. der Wicklungen, aufgehen können. Fallen die Bereiche in dem Fall der Überdeckungen zumindest teilweise zusammen, so kann von einem deckenden oder einem überlappenden Bereich gesprochen werden.

Die maximal zur Verfügung stehende Breite des Kraftfahrzeugs begrenzt den Bauraum, der zwischen den Längsträgern sitzt.

Der maximal zur Verfügung stehende Bauraum für das Antriebsaggregat ergibt sich also aus einem Freiraum zwischen einer ersten randständigen Versteifung, insbesondere einem linken Holm und einer zweiten randständigen Versteifung, insbesondere einem rechten Holm. Seitlich sind ein erstes Straßenrad und ein zweites Straßenrad vorhanden, aus deren Drehrichtung sich eine Fahrtrichtung eines das Antriebsaggregat tragenden Fahrzeugs ergibt. Quer zur Fahrtrichtung sind Elektromaschinen in dem Fahrzeug eingebaut.

Eine weitere markante Stelle in dem Antriebsaggregat ist die Antriebsachse der Elektromaschine.

Eine weitere markante Stelle in dem Antriebsaggregat ist die Antriebswelle der Elektromaschine.

Erfindungsgemäß wird die Geschwindigkeit der Elektromaschine durch das Planetengetriebe reduziert.

Es kann auch gesagt werden, an wenigstens einer Abtriebsseite einer Elektromaschine ist ein Planetengetriebe angeschlossen.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Vorteilhafterweise ist wenigstens eines der Getriebe von einem Gehäuse eingefasst. Das Getriebe kann für eine Montage dadurch vorbereitet sein, dass es Befestigungsösen, Befestigungspunkte oder Befestigungsmittel an seinem Gehäuse aufweist. Vorteilhafterweise ist das Getriebe für eine Befestigung an einem Randbereich eines Fahrzeugs vorgesehen. Ein solcher Randbereich erstreckt sich z. B. in Längsrichtung. Wird ein Fahrzeug in Fahrrichtung betrachtet, so gibt es einen linken Randbereich. Genauso gibt es einen rechten Randbereich (in Bezug auf die Fahrrichtung). Einer dieser beiden Randbereiche kann für die Anordnung eines der Gehäuse des Antriebsaggregats des Kraftfahrzeugs gestaltet sein. Der Bauraum bzw. das Bauvolumen, das durch das Getriebe und sein Gehäuse beansprucht wird, kann auch als Gehäusebauform, Gehäusebauraum oder Gehäusebauvolumen bezeichnet werden.

In einer vorteilhaften Weiterbildung können beide Getriebe in einem gemeinsamen Gehäuse eingehaust sein. Mit anderen Worten, es gibt ein Gehäuse, das die beiden Teilgetriebe, das eine Teilgetriebe für die eine Elektromaschine und das andere Teilgetriebe für die andere Elektromaschine, umschließt. Ein solches Gehäuse kann wiederum für eine Befestigung am Chassis oder an der Bodenplatte des Kraftfahrzeugs vorgesehen sein. Obwohl mechanisch bzw. kinematisch getrennt, insbesondere im Sinne von getrennten Einzelradantrieben, sind die einzelnen Getriebe in einem Gesamtgetriebegehäuse platziert. In diesem Fall ist nur ein Bauraum für das Gehäusevolumen vorzuhalten. In diesem Volumen sammeln sich alle Getriebe bzw. es werden alle Getriebe der beiden Einzelradantriebe in einem Volumen konzentriert. Die Aufhängung des (Gesamt-)Getriebes ist auf die Kinematik beider Getriebe optimiert.

Antriebsaggregate sind für einen Einbau in einem Kraftfahrzeug vorgesehen. Dadurch bestimmt sich die Baurichtung des Antriebsaggregats. Aufgrund seiner Baurichtung und seiner Einbaurichtung kann angegeben werden, ob das Antriebsaggregat für einen Längs-, Quer- oder transaxialen Einbau gestaltet ist. Die Elektromaschinen befinden sich in einem mittleren Bereich des Fahrzeugs, wenn sie in einem Fahrzeug eingebaut sind.

Zu dem Antriebsaggregat gehört, wie bereits gesagt, in einer vorteilhaften Ausgestaltung auch wenigstens ein Planetengetriebe. Das Planetengetriebe ist aufgrund seiner Zahnräder und aufgrund der Zähnezahl der Zahnräder für eine bestimmte Übersetzung gestaltet. In einer vorteilhaften Ausgestaltung ist die Übersetzung auf einen Wert festgelegt, der sich in einem Zahlenbereich zwischen 3,0 und 7,0 befindet. Vorzugsweise liegt die Übersetzung irgendwo zwischen 3,0 und 6,0. Die Übersetzung ist so ausgestaltet, dass sie ein Verhältniswert ist, der für einen Wert zwischen 3,0 und 7,0, zumindest zwischen 3,0 und 6,0 ausgestaltet ist.

Werden gewisse Gesamtübersetzungen benötigt, gibt es in dem Antriebsaggregat wenigstens zwei Stirnradzahnräder, die zu einem Stirnradpaar zusammengeschlossen sind. Wenigstens einem der Planetengetriebe des Antriebsaggregats ist ein Stirnradpaar nachgeschaltet. Das Übersetzungsverhältnis des Stirnradpaars kann z. B. so ausgestaltet sein, dass es für eine Übersetzung in einem Bereich von 1,0 bis 4,5, insbesondere in einem Bereich von 1,5 bis 3,5, ausgelegt ist.

Aus den Einzelübersetzungen lässt sich eine Gesamtübersetzung bilden. Die Gesamtübersetzung ergibt sich aus der Übersetzung aller Zahnradstufen bzw. aller Zahnradübersetzungen. Die Zahnradstufen in einem Momentenweg werden betrachtet. So kann z. B. der Momentenweg zwischen einer der Elektromaschinen und der daran, insbesondere indirekt, angeschlossenen Radantriebswelle zu einem einzelnen Rad betrachtet werden. Diese Gesamtübersetzung liegt auf einem Wert, der zwischen 1 und 31,5 beträgt.

Ein zuvor beschriebenes Antriebsaggregat kann mit schnell rotierenden Elektromaschinen realisiert werden. Zumindest eine der Elektromaschinen ist, vorzugsweise alle Elektromaschinen des Antriebsaggregats sind, für einen Drehzahlbereich bis zu 25.000 Umdrehungen/Minute ausgestaltet. Die Elektromaschine bzw. die Elektromaschinen sind für einen anpassbaren Drehzahlbereich gestaltet. Dieser Drehzahlbereich hat eine maximale Drehzahl. Die maximale Drehzahl kann z. B. bei wenigstens 20.000 Umdrehungen/Minute liegen, z. B. bei 25.000 Umdrehungen/Minute.

Eine weitere markante Verhältniszahl für das Antriebsaggregat ist das Verhältnis eines Rotordurchmessers (z. B. Variable "r") zu einer Blechpaketlänge (z. B. Variable "I") bei wenigstens einer der Elektromaschinen. Der Rotor, der in der Regel rund ist, kann durch einen Rotordurchmesser beschrieben werden. Der Stator, der die Statorwicklungen trägt, ist vorteilhafterweise mit Blechpaketen aufgebaut. Die Länge der Blechpakete kann gemessen werden. Dieser Wert des Verhältnisses aus "r" durch "I" kann in einem Bereich von 2 bis 0,25 liegen. Der Wert für eine vorteilhafte Maschine liegt in einem Bereich von 1,5 bis 0,4, solche Bereiche gehen z. B. von 1,0 bis 0,4 oder von 1,0 bis 0,5.

Weitere Besonderheiten, die für sich gesehen ebenfalls einzeln und in Kombination erfinderische Aspekte darstellen, werden nachfolgend vorgestellt.

Mit anderen Worten, die einzelnen Elektromaschinen werden in Bezug auf die Fahrrichtung oder in Bezug auf eine Mittellinie im Fahrzeug aufeinander zu bewegt, bis eine möglichst gute Überdeckung gegeben ist. Die Überdeckung kann nicht nur den Wicklungsbereich abdecken, sondern sogar bis zu dem Getriebebereich reichen. Werden die Elektromaschinen zueinander um 180° gedreht auf oder im Nahbereich einer Mittellinie des Fahrzeugs platziert, so kann ein Teil des Getriebes der ersten Elektromaschine in Überdeckung mit einem Teil des Wicklungsbereichs der zweiten Elektromaschine angeordnet sein. In einem solchen Fall überdecken sich die beiden Teilantriebe nicht nur in Bezug auf ihre Elektromaschinen, sondern auch in Bezug auf ihre Getriebe.

Werden die Radantriebswellen zwischen den beiden Elektromaschinen in Richtung auf die anzutreibenden (Straßen-)Räder von einem mittleren Bereich der blockartigen Anordnung der Elektromaschinen, insbesondere in einem gemeinsamen Gehäuse angeordnete Elektromaschinen, herausgeführt, so können diese Wellen fluchtend angeordnet sein. In einer Weiterbildung ist eine längere der Radantriebswellen eine Steckwelle. Die Radantriebswellen sind sozusagen zwischen den Elektromaschinen an jenen vorbeigeführt. Die Elektromaschinen überdecken auch die Radantriebswellen abschnittsweise.

Die Platzierung der Radantriebswelle(n) zwischen den Elektromaschinen kann an einer Stelle bzw. im Raum derart sein, dass die Radantriebswelle(n) innerhalb eines (gedachten) Trapezes oder Sechseck liegt/liegen. Das Trapez oder das Sechseck als (gedachte) Grenze für die Anordnungsmöglichkeiten der Radantriebswelle(n) kann dadurch gebildet werden, dass - in einem ersten Schritt der Bestimmung des Trapezes oder des Sechsecks - eine Gerade von einem Tangentialpunkt auf der Oberfläche der ersten Elektromaschine zu einem Tangentialpunkt auf der Oberfläche der zweiten Elektromaschine gezogen wird, wobei vorzugsweise als Tangentialpunkt jeweils der gleiche Winkelpunkt auf jeder der zylinderartigen Gehäuseoberflächen (z. B. bei 11 Uhr oder z. B. bei 12 Uhr des (ideal im Schnitt dargestellten) runden Gehäuses) gelegt ist. In einem alternativen Konstruktionsansatz zur Bestimmung der inneren, zur Verfügung stehenden Fläche kann auch ein äußerster oder oberster bzw. unterster Punkt auf dem Gehäuse der Elektromaschine bestimmt werden. Es gibt eine obere Gerade und eine untere Gerade, wenn die ausgewählten Punkte mit einer (gedachten) Gerade verbunden werden, die Seiten des Trapezes oder des Sechsecks darstellen. Weitere Seiten des (gedachten) Trapezes oder Sechsecks laufen durch die Mitten der Elektromaschinen bzw. die Endpunkte dieser Seiten liegen im Zentrum der Antriebswellen. Die durch vier Seiten eingefasste Trapezfläche oder die durch sechs Seiten eingefasste Sechseckfläche bestimmt als Seite eines Raums den Raum, in dem ein Teil der Radantriebswelle(n) entlanggeführt ist.

Die genaue Position der Radantriebswelle bestimmt sich aus der Übersetzung und den Zahnraddurchmessern der Zahnräder, die der Ausgangszahnradstufe zugerechnet werden bzw. zu dieser Stufe gehören. Zu der Ausgangszahnradstufe gehören in einer Ausgestaltung zwei Wälzkörper, die die letzte Getriebestufe des Getriebes an der Elektromaschine darstellen.

Die erste Antriebswelle und die zweite Antriebswelle können unterschiedlich weit von einer Bodenebene entfernt angesiedelt sein. Jede Antriebswelle befindet sich auf einer eigenen Höhe. Die Antriebswellen liegen vorteilhafterweise mittig in den Elektromaschinen. Die Zentren der Elektromaschinen liegen somit unterschiedlich hoch (z. B. in Bezug zu einem Straßenbelag).

In einer Ausgestaltung können die Antriebswellen auf der gleichen Seite aus je einer Elektromaschine herausragen. In einer anderen Ausgestaltung können die Antriebswellen in entgegengesetzte Richtungen aus den Elektromaschinen herausstehen.

Die Elektromaschinen sind zylindrische, längliche Körper, die vorteilhafterweise koaxial angeordnete Antriebswellen haben.

Parallel zu den Erstreckungsrichtungen der Antriebswellen verläuft wenigstens eine Abtriebswelle. In einer weitergehend vorteilhaften Ausgestaltung verlaufen zwei Abtriebswellen parallel zu den Erstreckungsrichtungen der Antriebswellen.

Vorteilhaft sind parallele Anordnungen von Wellen zueinander, weil dies sowohl beim Zusammenbau als auch beim Betrieb deutlich leichtere und einfach zu bewerkstelligende Antriebsaggregate schafft. Jedem Fachmann ist klar, dass es bei Kraftfahrzeugkomponenten tatsächlich aber keine hundertprozentige Parallelität gibt, sondern nur Parallelität im Rahmen der Fertigungstoleranzen. Im Sinne der vorliegenden Beschreibung sind auch solche Wellenverläufe zueinander als parallel anzusehen, deren Richtung oder Erstreckung zueinander in einem geringeren Wertebereich abweichen als von 5°. Ein Winkelversatz von ≥ 5° kann durchaus als parallel angesehen werden.

Die Radantriebswellen können zueinander koaxial Teil des Antriebsaggregats sein. Die einzelnen Radantriebswellen können auf einer gemeinsamen Achse angeordnet sein. Sie können koaxial zueinander platziert sein. Die Koaxialität kann sogar durch eine, wenigstens teilweise gegebene, Verschachtelung herbeigeführt werden, d. h., die Wellen können ineinanderliegend realisiert sein.

Am Rande bemerkt, eine Antriebswelle ist vorteilhafterweise diejenige Welle, die durch die Elektromaschine, aus der die Antriebswelle hinausragt, ihr antreibendes Drehmoment erhält. Unter einem anderen Blickwinkel kann auch gesagt werden, die Antriebswelle ist eine leistungsführende Welle, weil sie mechanische Leistung überträgt. Über weitere Getriebestufen, wie z. B. über ein oder zwei oder mehr als zwei Planetenstufen oder Planetengetriebe, wird das Drehmoment auf wenigstens eine, vorzugsweise auf zwei Abtriebswellen, die insbesondere Radantriebswellen sind, weitergeleitet. So gelangt die Leistung zu den Radantriebswellen bzw. den Abtriebswellen. Eine der Abtriebswellen ist für den Antrieb eines ersten Straßenrades ausgelegt. Eine andere Abtriebswelle ist für den Antrieb eines zweiten Straßenrades ausgelegt.

Startend von den Elektromaschinen können ausgangsseitig der Elektromaschinen Planetengetriebe angeordnet sein. Pro Elektromaschine kann wenigstens ein Planetengetriebe platziert sein. Ein Steg eines Planetengetriebes kann dann auf eine Zwischenwelle geführt sein. Die Zwischenwelle trägt ein Zahnrad einer Ausgangszahnradstufe (im Sinne eines "final drives"). Im Drehmomentenfluss nachfolgend kann dann eine Komponente wie eine Kupplung, ein Summiergetriebe oder ein Differentialgetriebe angeordnet sein, um von dieser Komponente auf die eine oder mehrere Radantriebswellen weiterzuführen. Die Radantriebswelle, die auch als Abtriebswelle bezeichnet werden kann, verläuft noch gleichgerichtet zu einer der Antriebswellen der Elektromaschinen.

Vorteilhaft ist es, wenn Schaltelemente, wie Kupplungen oder Bremsen, in dem Antriebsaggregat vorhanden sind, wodurch verschiedene Gänge ein- und ausschaltbar sind. Sind zu jeder Elektromaschine je zwei Gänge schaltbar, so kann eine Achse, vorzugsweise mit zwei Einzelradantrieben, als Antriebsachse, die unter Auswahl von einem von vier verschiedenen Gängen betrieben werden kann, gestaltet werden.

Für Antriebsaggregate, die besonders sparsam mit der für sie zur Verfügung stehenden Energie umgehen sollen, ist es vorteilhaft, wenn eines der Antriebsaggregate in einem Betriebszustand komplett abgekoppelt werden kann. Ein solcher Zustand kann auch als optionaler Abwurf bezeichnet werden. Es kann der Zustand herbeigeführt werden, in dem die eine der Elektromaschinen keine Antriebsleistung weiterleiten kann, idealerweise sogar von dem gesamten Antriebsstrang abgekoppelt ist, z. B. über Klauenkupplungen, Lamellenkupplungen oder Reibkupplungen.

Auf einen Korb eines Differentials können zwei verschiedene Zahnräder von zwei Antrieben geführt sein, sodass das Differential als Verbindungsglied zwischen zwei Radantriebswellen angesiedelt sein kann. Als geeignete Differentialgetriebe haben sich Kegelraddifferentialgetriebe und Planetenraddifferentialgetriebe erwiesen.

Das die Getriebe aufnehmende Zwischengehäuse kann als Gehäuse für ein erstes Getriebe und als Gehäuse für ein zweites Getriebe entkoppelt sein.

Die Teil des Antriebsaggregats bildende(n) Radantriebswelle(n) überträgt/übertragen ein Drehmoment weiter in Richtung auf wenigstens ein (Straßen-)Rad. Das Straßenrad kann mit einem Sturz gegenüber einer Straße ausgestattet sein. Dadurch wird es erforderlich, zumindest das letzte Stück der Antriebswelle abwinkelbar gegenüber der Radantriebswelle auszugestalten. Auch kann es erforderlich sein, eine Plusspur oder eine Minusspur zwischen den Straßenrädern einer Achse einzustellen. Auch in einem solchen Fall muss die Seitenwelle womöglich in einem Winkel gegenüber der Radantriebswelle stehen.

Damit ein Winkel zwischen wenigstens einer Radantriebswelle und einer Seitenwelle, wie der ersten oder der zweiten Seitenwelle, herstellbar ist, gibt es wenigstens ein Gelenk, idealerweise zwei Gelenke auf der Antriebsverbindungsstrecke zum Rad. Die Radantriebswelle mündet in wenigstens ein Gelenk aus. An einem Ende ist die Radantriebswelle von einem Gelenk eingefasst. Das Gelenk ermöglicht die Übertragung des Antriebsmoments in eine andere Richtung als die Erstreckungsrichtung der Radantriebswelle.

Werden über zwei Radantriebswellen zwei zueinander verschiedene Straßenräder angetrieben, z. B. das linke und das rechte Straßenrad einer Achse, so sollte an einem Ende jeder Radantriebswelle ein Gelenk vorgehalten sein. Das Gelenk ändert die Richtung, wie das Antriebsmoment über einen Teil einer Welle geleitet wird. Jeweils eine Radantriebswelle mündet in wenigstens ein Gelenk. Über das Gelenk kann das Antriebsdrehmoment oder die Antriebsdrehmomente auf an Seitenwellen anschließbare Straßenräder weitergeleitet werden.

In einer Ausgestaltung des Antriebsaggregats sind die Getriebe des Antriebsaggregats in einem Gehäuse eingefasst. Ein solches Gehäuse liegt randseits der Elektromaschinen. Hierdurch kann ein einziges dämpfendes Gehäuse mit einer entsprechenden Eigenmasse genommen oder vorgehalten werden, das die Laufgeräusche aller Getriebe in seinem Inneren einhaust. Durch die Reduktion auf ein Gehäuse ist das Antriebsaggregat wiederum kompakter zu gestalten.

Aus Bauraumüberlegungen kann es vorteilhaft sein, beide Elektromaschinen in einem gemeinsamen Gehäuse einzubauen. Beide Elektromaschinen können in einer besonders platzsparenden Variante in einem einzigen Gehäuse eingehaust sein.

In einer besonders interessanten Ausgestaltung kann an jeder der vorhandenen Abtriebsseiten, d. h. an jeder der Abtriebsseiten der Elektromaschinen, ein Planetengetriebe platziert sein. An die jeweilige Elektromaschine ist - in diesem Fall - ein Planetengetriebe angeschlossen. Das Planetengetriebe, insbesondere in der vorgestellten Betriebsweise, erlaubt, die gewünschten Momente zu übertragen und trotzdem mit dem zur Verfügung stehenden Bauraum auszukommen.

Eine Komponente des Planetengetriebes ist ein Hohlrad. Das Hohlrad kann als ortsfestes Hohlrad ausgestaltet sein. Eine Fixierung des Hohlrads kann durch ein Festlegen an einem Gehäuse erfolgen. Das Hohlrad kann an dem Gehäuse befestigt sein oder ein Teil des Gehäuses sein. Noch kompakter wird es, wenn das Hohlrad als Teil des Gehäuses ausgestaltet ist.

Das Hohlrad kann einen bestimmten Durchmesser besitzen. Das Hohlrad kann einen Durchmesser aufweisen, der kleiner oder gleich groß ist wie ein Gehäusedurchmesser der dazugehörigen Elektromaschine. Dann ist es möglich, das Hohlrad im Inneren des Gehäuses der Elektromaschine einzubauen. So passt das Hohlrad in den verlängerten Raum der Elektromaschine.

Das Antriebsaggregat erfährt noch eine Verbesserung, wenn es schaltbar realisiert ist. Es kann so gestaltet sein, dass vorzugsweise wenigstens eines der Planetengetriebe, idealerweise je ein Planetengetriebe pro Elektromaschine, z. B. durch Festsetzen einzelner Getriebeelemente, schaltbar ist. Hierfür können Bremsen, Kupplungen und/oder Sperren eingesetzt werden. Teil des Antriebsaggregats können solche Komponenten wie Bremsen, Kupplungen und/oder Sperren sein, die Teil des Planetengetriebes sein können. So kann ein Antriebsaggregat kompakt ausgestaltet werden und trotzdem ein breites Anwendungsspektrum abdecken.

In einer vorteilhaften Ausgestaltung hat jede Elektromaschine wenigstens ein Planetengetriebe, in günstigen Weiterentwicklungen sogar zwei Planetengetriebe, über die ein aus der Elektromaschine stammendes Antriebsmoment weitergeleitet werden kann.

In einer vorteilhaften Ausgestaltung können zwei Elektromaschinen zueinander mit einer Inklination gegenüber einem Bodenblech, einem Spritzschutz oder einer Straßenebene in dem Fahrzeug verbaut sein.

Als besonders vorteilhaft hat es sich gezeigt, wenn die Momentenweiterleitung über das Planetengetriebe derart ausgeführt ist, dass über die Sonne des Planetengetriebes das Moment eingeleitet, d. h. über die Sonne in das Planetengetriebe geführt ist. Das eingeleitete Moment stammt von der Welle der Elektromaschine. Die Sonne ist durch die Elektromaschine antreibbar. Aus dem Planetengetriebe wird das Drehmoment wieder ausgeleitet, indem es über einen Steg des Planetengetriebes auf eine Abtriebswelle weitergeführt wird.

Ein weiterer Vorteil in den zuvor vorgestellten Ausgestaltungen eines Antriebsaggregats mit zwei oder mehr als zwei Elektromaschinen kann in der hohen Gleichteilanzahl gesehen werden. Nahezu alle Teile eines ersten Antriebsstrangs, z. B. eines ersten Einzelradantriebs, können identisch zu einem zweiten Antriebsstrang, z. B. eines zweiten Einzelradantriebs, realisiert werden. Um trotzdem die Möglichkeit zu haben, Schwingungen, Harmonische und unerwünschte Lärmentwicklung zu unterbinden, können die Ausgangszahnradstufen mit um wenige Zähnezahlen zueinander abweichende Zahnradpaarungen ausgestaltet sein. Mit anderen Worten, alle Teile des einen Teils des Antriebsstrangs und alle Teile des anderen Teils des Antriebsstrangs können mit zueinander identischen Teilen realisiert werden, außer die letzte Übersetzungsstufe, die z. B. durch eine Zahnradpaarung mit Stirnzahnrädern umgesetzt ist. So ist es möglich, die eine Zahnradpaarung und die andere Zahnradpaarung, die beide z. B. auf das gleiche Differential oder die gleiche Kupplung geführt sind, um einen Zahn abweichend zu realisieren. Dadurch wird die Verstärkung von Schwingungen unterbunden. Durch eine Ansteuerung der Elektromaschinen und durch Einstellung bzw. Regelung ihrer Drehzahlen können wenigstens eine von den beiden, einer Achse zugerechneten Elektromaschinen im quasi-optimalen Betriebspunkt (insbesondere im Hinblick auf den Wirkungsgrad) betrieben werden. Hohe Gleichteilzahlen erlauben Optimierungsüberlegungen und besonders vorteilhafte Auslegungen jeder einzelnen Komponente, weil mehr Entwicklungsleistungen pro Bauteil erbracht werden können. Dadurch wird das Antriebsaggregat wiederum kompakter.

Für eine Variante des zuvor vorgestellten Antriebsaggregats mit drei Übersetzungsstufen bzw. drei Getriebestufen lassen sich günstige Übersetzungswertebereiche angeben. Die erste Stufe kann aus einem einstufigen Planetengetriebe bestehen. Das Übersetzungsverhältnis kann z. B. auf einen Wert zwischen 2 und 3 gelegt werden. Die zweite Stufe kann aus einem zweistufigen Planetengetriebe bestehen. Das Übersetzungsverhältnis kann auf einen Wert gelegt werden, der in einem Wertebereich zwischen 2,5 und 7 liegt, vorzugsweise zwischen 3 und 6 liegt. Die dritte Übersetzungsstufe kann durch zwei Stirnradzahnräder realisiert sein, deren Übersetzungsverhältnis innerhalb eines Wertbereichs von 1 bis 4,5 angesiedelt sein kann, z. B. bei einem Wert zwischen 1,5 und 4. Die angegebenen Werte erlauben ein kompaktes Antriebsaggregat.

Eine Leistungsübertragung von einer der Antriebsachsen auf die Radantriebswelle kann über ein Getriebe bzw. Getriebeelement erfolgen, das nur eine Stufe umfasst. Die Übertragung erfolgt einstufig. Die Zahnradübertragung ist an jener Stelle vorteilhafterweise einstufig. In diesem Fall entsprechen die halben Durchmesser der Zahnräder jener Stufe dem Abstand zwischen den Wellen bzw. Achsen. So ist es möglich, anhand von Durchmessern von Zahnrädern der Zahnradübertragung einen Abstand zwischen Antriebsachse und Radantriebswelle festzulegen. Die Verhältnisse der Zahnräder bestimmen den Abstand der beiden Wellen oder Achsen (Abtriebsachse oder Abtriebswelle auf der einen Seite und Zahnantriebsachse oder Zahnantriebsachse auf der anderen Seite). Durch die einstufige Ausleitung (im Sinne des "final drives") lässt sich eine sehr kompakte Anordnung realisieren.

Die zuvor dargestellten Kombinationen und Ausführungsbeispiele lassen sich auch in zahlreichen weiteren Verbindungen und Kombinationen betrachten.

Nach einem Aspekt kann auch gesagt werden, die Getriebe zusammen mit ihrem jeweiligen Antriebsmaschinen, den Elektromaschinen, sind so arrangiert, dass ein zentraler Bereich, gesehen in Querrichtung durch das Fahrzeug, dessen Längsrichtung mit der Fahrrichtung zusammenfällt, für die Aufnahme von zwei Elektromaschinen vorgesehen ist.

Auch ist es möglich, schaltbare Planetengetriebe mit kuppelbaren Radantriebswellen zu kombinieren, sodass jede Elektromaschine über ein mehrstufiges Getriebe entweder als Einzelradantrieb oder als Teil eines Achsantriebs betrieben wird.

Außerdem ist es möglich, einzelne oder alle Elektromaschinen als abkuppelbare Elektromaschinen auszuführen, sodass wenigstens eine Elektromaschine eines Verbundes aus mehreren Elektromaschinen im Kfz-Antriebsstrang abgekuppelt und so "still" gesetzt werden kann.

Es kann auch gesagt werden, die vorliegende Beschreibung beschäftigt sich mit einem Antriebsaggregat für ein Kraftfahrzeug, das mit wenigstens zwei Elektromaschinen ausgestattet in besonderen Schaltvarianten als Einzelradantrieb und in anderen Schaltvarianten als Achsantrieb betrieben werden kann. Eine hierfür günstige Anordnung von Komponenten wie den Elektromaschinen und den Radantriebswellen wird vorgeschlagen, wonach die Radantriebswelle(n) möglichst zwischen den Rotoren (bzw. den Elektromaschinen als Ganzes) hindurch nach außen des Antriebsaggregats geführt sind. Die Radantriebswelle(n) und die Elektromaschinen sind nebeneinander verlaufend angeordnet. Die Elektromaschinen fassen die Antriebsdrehmoment abgebende(n) Welle(n) seitlich ein.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 eine erste Ausführungsform, insbesondere von einer seitlichen Schema-Ansicht, zeigt,
Figur 2 eine zweite Ausführungsform, insbesondere von einer seitlichen Schema-Ansicht, zeigt,
Figur 3 eine dritte Ausführungsform zeigt, bei der in einer Schemadarstellung eine von zwei Antriebsmaschinen antriebslos mitgeführt wird,
Figur 4 ein Achsarrangement eines reinen Einzelradantriebs als Schemadarstellung einer vierten Ausführungsform zeigt,
Figur 5 ein Achsarrangement eines Einzelradantriebs an einer gemeinsamen Achse als Schemadarstellung einer fünften Ausführungsform zeigt,
Figur 6 ein Achsarrangement eines Achsantriebs als Schemadarstellung einer sechsten Ausführungsform zeigt,
Figur 7 ein Achsarrangement eines Achsantriebs als Schemadarstellung einer siebten Ausführungsform zeigt,
Figur 8 ein Achsarrangement eines Achsantriebs als Schemadarstellung einer achten Ausführungsform zeigt,
Figuren 9 bis 11 ein Achsarrangement eines Antriebs Schemadarstellung zeigt, der als Einzelradantrieb und als Achsantrieb arbeiten kann,
Figur 12 ein Achsarrangement ähnlich zu dem Achsarrangement nach den Figuren 9 bis 11 zeigt,
Figur 13 ein Achsarrangement als Schemadarstellung eines Einzelradantriebs mit schaltbaren Getrieben zeigt und
Figur 14 ein Achsarrangement mit schaltbaren Getrieben als Schemadarstellung eines Achsantriebs zeigt.

### Figurenbeschreibung

In den Figuren 1, 2 und 3 bis 14, die im Folgenden gemeinsam erläutert werden, werden unterschiedliche Ausführungsformen eines Antriebsaggregats 1, 1^{I}, 1^{II}, 1^{III}, 1^{IV}, 1^{V}, 1^{VI}, 1^{VII}, 1^{VIII}, 1^{IX} gezeigt. Das Antriebsaggregat 1, 1^{I}, 1^{II}, 1^{III}, 1^{IV}, 1^{V}, 1^{VI}, 1^{VII}, 1^{VIII}, 1^{IX} ist für einen Antrieb, der seine Antriebsleistung aus elektrischer Energie bezieht, aus einer wiederaufladbaren (nicht dargestellten) Stromquelle konzipiert, wie aus einem elektrochemischen Stromspeicher, wie aus einer Brennstoffzellenanordnung und/oder wie aus einem kapazitiven Stromspeicher.

Es sei an dieser Stelle ein allgemeiner Hinweis zur Gestaltung und Darstellung erlaubt. Einzelne, ausgewählte Gestaltungsmerkmale, die anhand einzelner bzw. ausgewählter Figuren beschrieben werden, gibt es auch entsprechende grafische Äquivalente und hierzu entsprechende Symbole in anderen Figuren. Folglich kann die Beschreibung von einer Figur auf die anderen Figuren per Querreferenzierung übertragen werden, ohne dass die Beschreibung noch einmal zu wiederholen ist. Um die Beschreibung kürzer zu halten, gelten die Ausführungen zu einer Figuren auch für die anderen Figuren, in sofern übertragbar.

In Figur 1 bzw. Figur 2 wird die räumliche Anordnung von jeweils zwei Elektromaschinen 3, 3^{I}, 5, 5^{I} und der dazwischen existierenden Abtriebswelle 27, 27^{I} des Getriebes gezeigt, z. B. einmal als Vorderradantrieb für beide Vorderräder und einmal als Hinterradantrieb für beide Hinterräder. Eine Positionierung der Komponenten des Antriebs bzw. eine Anordnung der Motoren 3, 3^{I}, 5, 5^{I} in Bezug zu der Abtriebswelle 27, 27^{I} gemäß Figur 1 bzw. gemäß Figur 2 ist mit den verschiedenen, in den folgenden Figuren gezeigten Antriebsaggregaten 1, 1^{I}, 1^{II}, 1^{III}, 1^{IV}, 1^{V}, 1^{VI}, 1^{VII}, 1^{VIII}, 1^{IX} realisierbar.

Eine erste Elektromaschine 3, 3^{I} und eine zweite Elektromaschine 5, 5^{I} sind gemäß Figur 1 bzw. Figur 2 in einem Bauraum zwischen einer Bodenplatte 53, 53^{I}, die einen Fahrgastraum (nicht dargestellt) begrenzt, und einer zweiten Bodenplatte 54, 54^{I}, die ein Spritzschutz gegenüber einer Fahrbahn (nicht dargestellt) ist, eingebaut. Die Elektromaschinen 3, 5 haben jeweils einen Rotordurchmesser 10, 10^{I}, der größer als ein Durchmesser der jeweiligen Antriebswellen 16, 18 ist. Eine erste Antriebswelle 16 hat einen Abstand 23, 23^{I} zur zweiten Antriebswelle 18. Es kann hierbei auch von einem Drehachsabstand gesprochen werden. Wie in Figur 1 gezeigt ist, kann ein Abstand 12 zwischen einem ersten Elektromaschinengehäuse 4 und einem zweiten Elektromaschinengehäuse 6 so dimensioniert werden, dass er (in etwa) einem Durchmesser 10" einer Abtriebswelle 27 gleicht. Außerdem ist die Abtriebswelle 27, 27^{I} in einer Dreieckskonfiguration, seitlich zu einer konstruktiven Hilfslinie, zwischen den Antriebswellen 16, 18 versetzt, also mit einem Versatz 24, 24^{I} angeordnet. Ein solcher Abstand ist vorteilhaft für eine oberflächliche Kühlung der Elektromaschinen 3, 3^{I}, 5, 5^{I}. Eine besonders kompakte Anordnung, wie in Figur 2 gezeigt ist, liegt vor, wenn der Abstand 23^{I} möglichst klein gewählt wird. Der Versatz 24^{I} erlaubt eine freie Dimensionierbarkeit der Abtriebszahnräder, von denen wenigstens eines auf der Abtriebswelle 27^{I} angeordnet werden kann. Die Abstände 23, 23^{I} und Versätze 24, 24^{I} haben zumindest einen Abstand oder eine Weite, wodurch die Elektromaschinen 3, 3^{I}, 5, 5^{I} und Abtriebswelle 27, 27^{I} berührungslos angeordnet werden können, d. h., die Elektromaschinen 3, 3^{I}, 5, 5^{I} schlagen in einem mittleren Bereich 8, 8^{I} im Betrieb nicht aneinander.

Nach einem anderen geometrischen Aspekt kann die Wellenanordnung von Figur 1 auch wie folgt beschrieben werden. Als konstruktives Hilfsmittel lässt sich, in der schematischen Querschnittsdarstellung von Figur 1 gestrichelt eingezeichnet, eine untere Gerade A₁ sowie eine obere Gerade A₂ jeweils tangential an die Elektromaschinen 3, 5 anlegen. Vier somit festgelegte Tangentialpunkte, wie der Tangentialpunkt T, sind mit zwei weiteren Geraden B₁, B₂, die die Antriebswellen 16, 18 durchschneiden, verbindbar. Die Geraden A_{1,} A₂, B₁, B₂ schließen eine Fläche F, d. h. eine Trapezfläche bzw. eine Rechteckfläche (bei gleich großen Elektromaschinen 3, 5), ein. Die Abtriebswelle 27, 27^{I} ist, im Querschnitt betrachtet, so angeordnet, dass die Abtriebswelle 27, 27^{I} innerhalb der von den Geraden A_{1,} A₂, B₁, B₂ eingeschlossenen Fläche liegt. Sollten die Zentren der Antriebswellen nicht exakt in der Mitte der Elektromaschinen 3, 5 liegen, so ergibt sich aus dem Trapez bzw. Rechteck ein Sechseck. Die Geraden B₁, B₂ sind in die Geraden B₁^{I}, B₄^{I} und B₂^{I}, B₃^{I} zu unterteilen. Diese Geraden B₁^{I}, B₄^{I} und B₂^{I}, B₃^{I} besitzen einen Eckpunkt oder Wendepunkt auf den Antriebswellen 16, 18.

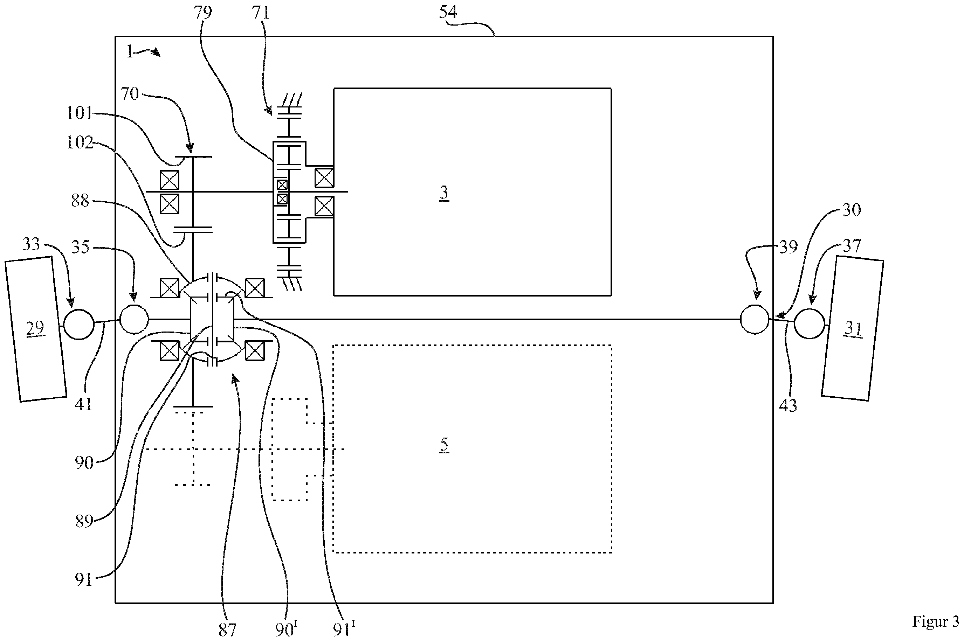

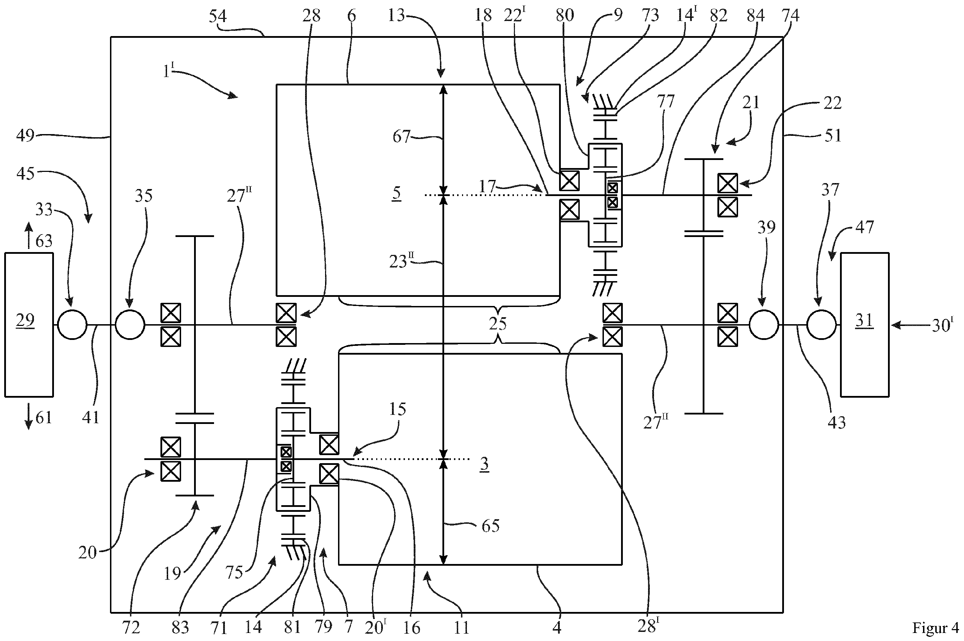

Eine erste Elektromaschine 3 und eine zweite Elektromaschine 5 können, wie z. B. in Figur 3 gezeigt ist, gleich ausgerichtet nebeneinander angeordnet sein. Aber auch eine gegenläufige Ausrichtung der Elektromaschinen 3, 5, die z. B. in Figur 4 gezeigt ist, ist möglich. Die Laufrichtung der Elektromaschinen 3, 5 ist durch eine Steuereinheit (nicht dargestellt) umkehrbar.

Das Antriebsaggregat 1 von Figur 3 hat eine ausgeschaltete zweite Elektromaschine 5, die deshalb mit einem zugeordneten Getriebe nur gestrichelt eingezeichnet ist, weil sie zu dem auf die Antriebsräder 29, 31 wirkenden Drehmoment keinen Beitrag liefert und die gestrichelte Anordnung mit Gleichteilen aufgebaut ist. Die Antriebsräder 29, 31 sind mit einer eingerichteten Spur gezeigt, welche zur Verdeutlichung der Winkelstellung mit einem etwas zu großen Winkel gezeichnet wurde. Die Winkelstellung der Antriebsräder 29, 31 an der Antriebsachse 30 wird ermöglicht durch ein erstes Gelenkpaar aus einem ersten Gelenk 33, das über eine erste Seitenwelle 41 mit einem zweiten Gelenk 35 verbunden ist, und das dem ersten Antriebsrad 29 zugeordnet ist. In entsprechender Weise ist ein zweites Gelenkpaar aus einem dritten Gelenk 37, das über eine zweite Seitenwelle 43 mit einem vierten Gelenk 39 verbunden ist, im Bereich des zweiten Antriebsrads 31 vorhanden. Entlang der Antriebsachse 30 werden über ein Differential 87 beide Antriebsräder 29, 31 angetrieben. In dem Antriebsaggregat 1 wird Drehmoment nur aus der ersten Elektromaschine 3 dem Korb 88 des Differentials 87 zugeführt. Eine Drehzahlumsetzung erfolgt über ein der ersten Elektromaschine 3 nachgeordnetes Planetengetriebe 71, das über eine auf einen Steg 79 des Planetengetriebes 71 folgende Zahnradpaarung 70 das Differential 87, insbesondere den Korb 88, antreibt. Durch den Korb 88 erstreckt sich ein Bolzen 89. Der Bolzen 89 trägt Ausgleichsräder 91, 91^{I}, die mit Tellerrädern 90, 90^{I} in Eingriff stehen. Das Differential 87 ist folglich ein Kegelraddifferential. Ein erstes Tellerrad 90 ist mit einem Segment einer ersten Abtriebswelle 107^{I} verbunden, das zu dem vierten Gelenk 39 führt. Ein zweites Tellerrad 90^{I} ist mit einem anderen Segment einer ersten Abtriebswelle 107^{II} verbunden, das zu dem zweiten Gelenk 35 führt.

Für das Planetengetriebe 71 ist eine Übersetzung ins Langsame bzw. eine Untersetzung in einem Bereich von 2,5 bis 7, vorzugsweise in dem Wertebereich von 3 bis 6 vorgebbar. Hinzu kommt noch ein weiteres Übersetzungsverhältnis der Zahnradpaarung 70 mit einem ersten Zahnrad 101 und einem zweiten Zahnrad 102, das wahlweise vorgebbar ist in einem Bereich von 1 bis 4,5, vorzugsweise in dem Wertebereich von 1,5 bis 4. Als besonders vorteilhaft hat sich eine Gesamtübersetzung ins Langsame in dem Wertebereich von 3 bis 6 in Voruntersuchungen herausgestellt.

Der maximal zur Verfügung stehende Bauraum für das Antriebsaggregat 1, 1^{I}, 1^{II}, 1^{III}, 1^{IV}, 1^{V}, 1^{VI}, 1^{VII}, 1^{VIII}, 1^{IX} ergibt sich also, wenn ergänzend zu Figur 1 bzw. Figur 2 beispielhaft Figur 3 oder eine der Figuren Figur 4 bis Figur 14 betrachtet werden, aus einem Freiraum zwischen einer ersten randständigen Versteifung, insbesondere einem linken Holm 49, 49^{I}, 49^{II}, der insbesondere in Figur 4, Figur 5 sowie Figur 13 zu sehen ist, und einer zweiten randständigen Versteifung, insbesondere einem rechten Holm 51, 51^{I}, 51^{II}, der ebenfalls in Figur 4, Figur 5 sowie Figur 13 zu sehen ist. Seitlich sind ein erstes Straßenrad, insbesondere Antriebsrad 29, 29^{I}, 29^{II} und ein zweites Straßenrad, insbesondere Antriebsrad 31, 31^{I}, 31^{II} vorhanden, aus deren Drehrichtung sich eine Fahrtrichtung 61, 63 eines das Antriebsaggregat 1, 1^{I}, 1^{II} tragenden Fahrzeugs ergibt. Quer zur Fahrtrichtung 61, 63 sind Elektromaschinen 3, 3^{I}, 3^{II}, 3^{III}, 3^{IV}, 5, 5^{I}, 5^{II}, 5^{III}, 5^{IV} in dem Fahrzeug eingebaut.

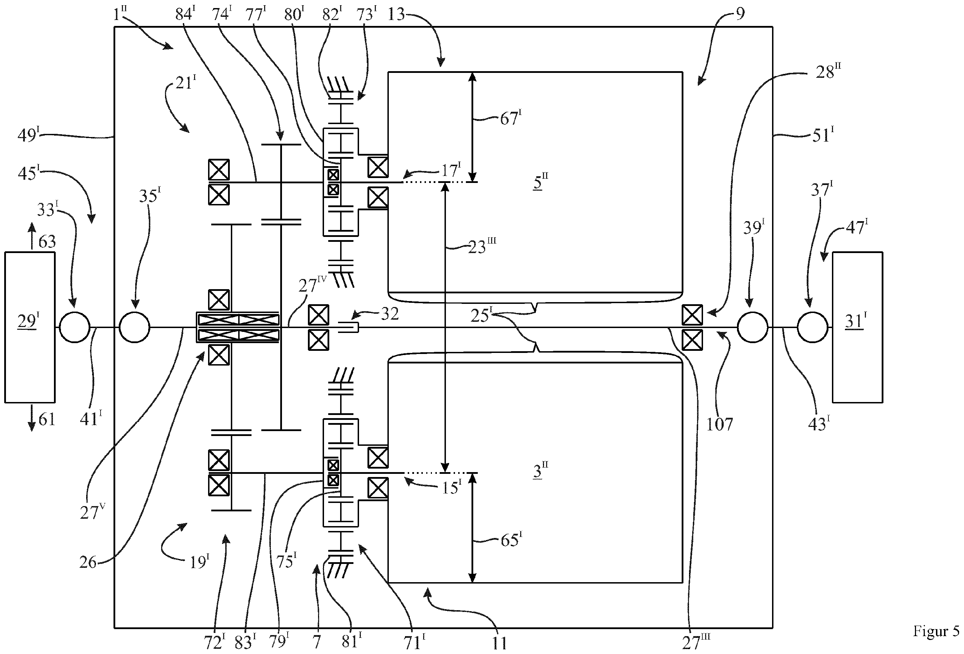

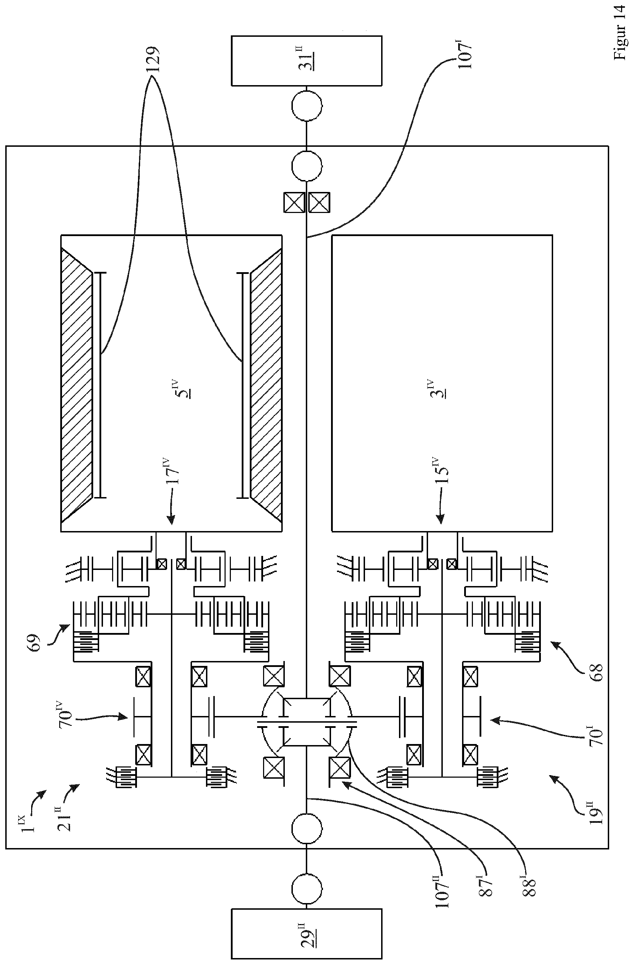

Werden nun die weiteren Figuren, beginnend mit Figur 4, betrachtet, so ist eine erste Elektromaschine 3, 3^{I}, 3^{II}, 3^{III}, 3^{IV} mit einem ersten elektrischen Bereich 11 vorhanden. Die erste Elektromaschine 3, 3^{I}, 3^{II}, 3^{III}, 3^{IV} besitzt eine erste Antriebsachse 15, 15^{I}, 15^{II}, 15^{III}, 15^{IV}. Eine zweite Elektromaschine 5, 5^{I}, 5^{II}, 5^{III}, 5^{IV} hat einen zweiten elektrischen Bereich 13. Die zweite Elektromaschine 5, 5^{I}, 5^{II}, 5^{III}, 5^{IV} ist mit einer zweiten Antriebsachse 17, 17^{I}, 17^{III}, 17^{IV} wirkverbunden. Die Elektromaschinen 3, 3^{I}, 3^{II}, 3^{III} , 3^{IV}, 5, 5^{I}, 5^{II}, 5^{III}, 5^{IV} haben eine Rotoranordnung (vgl. Figur 1), die in einer am Fahrzeug befestigten Statoranordnung (vgl. Figur 14) drehbar ist. Drehmoment wird also mittels durch Strom an Windungen erzeugten elektrischen Feldern generiert. Die erste Antriebsachse 15, 15^{I}, 15^{II}, 15^{III}, 15^{IV} und die zweite Antriebsachse 17, 17^{I}, 17^{III}, 17^{IV} erstrecken sich insbesondere parallel zueinander und weisen, vorzugsweise rechtwinklig zu einer Achserstreckungsrichtung, einen Abstand 23", 23^{III} zueinander auf (siehe Figur 4 sowie Figur 5). Der Abstand 23^{II}, 23^{III} ist größer als ein Statordurchmesser rechtwinklig zur Achserstreckungsrichtung genommen. Anders gesagt, ist der Abstand 23^{II}, 23^{III} größer als eine Summe aus erstem Statorradius 65, 65^{I} der ersten Elektromaschine 3, 3^{I} und zweitem Statorradius 67, 67^{I} der zweiten Elektromaschine 5, 5^{I}, vorzugsweise jeweils als äußere Abmessung, einschließlich Gehäuse, in gleichen metrischen Dimensionen genommen. Der Abstand 23^{II}, 23^{III} ist kleiner als eine Spurweite zwischen zwei Antriebsrädern 29, 31 bzw. 29^{I}, 31^{I} bzw. 29^{II}, 31^{II}. Von den Elektromaschinen 3, 3^{I}, 3^{II}, 3^{III}, 3^{IV}, 5, 5^{I}, 5^{II}, 5^{III}, 5^{IV} wird jeweils ein auf den Antriebsachsen 15, 15^{I}, 15^{II}, 15^{III}, 15^{IV}, 17, 17^{I}, 17^{III}, 17^{IV} angeordnetes Antriebssonnenrad 75, 75^{I}, 75^{II}, 75^{III}, 77, 77^{I}, 77^{III} angetrieben. Das erste Antriebssonnenrad 75, 75^{I}, 75^{II}, 75^{III} ist Teil des ersten Getriebes 19, 19^{I}, 19^{II}, 19^{III}, 19^{IV}. Das zweite Antriebssonnenrad 77, 77^{I}, 77^{III} ist Teil des zweiten Getriebes 21, 21^{I}, 21^{II}, 21^{III}. Das erste Getriebe 19, 19^{I}, 19^{II}, 19^{III}, 19^{IV} umfasst ein erstes Planetengetriebe 71, 71^{I}, 71^{II} und eine erste Ausgangszahnradstufe 72, 72^{I}, die auch als Zahnradpaarung bezeichnet werden kann. Das zweite Getriebe 21, 21^{I}, 21^{II}, 21^{III}. umfasst ein zweites Planetengetriebe 73, 73^{I}, 73^{II} und eine zweite Ausgangszahnradstufe 74, 74^{I}, die auch als Zahnradpaarung bezeichnet werden kann. Die beiden Planetengetriebe 71, 71^{I}, 71^{II}, 73, 73^{I}, 73" weisen jeweils die Antriebssonnenräder 75, 75^{I}, 75^{II}, 75^{III}, 77, 77^{I}, 77^{III}, einen ersten Steg 79, 79^{I}, 79^{II} bzw. zweiten Steg 80, 80^{I} mit einer Mehrzahl von Planetenrädern und ein erstes Ringrad 81, 81^{I}, 81^{II} bzw. zweites Ringrad 82, 82^{I} auf. Diese Ringräder 81, 81^{I}, 81^{II}, 82, 82^{I} sind am Getriebegehäuse 14, 14^{I}, 14^{II} festgesetzt. Die Getriebe 19, 19^{I}, 19^{II}, 19^{III}, 19^{IV}, 21, 21^{I}, 21^{II}, 21^{III}. weisen jeweils auf den Antriebsachsen 15, 15^{I}, 15^{II}, 15^{III}, 15^{IV}, 17, 17^{I}, 17^{III}, 17^{IV} eine Wälzlageranordnung 20, 22 mit drei Wälzlagern auf. Ein erstes Wälzlager 20^{I}, 22^{I} stützt den ersten Steg 79, 79^{I}, 79^{II} bzw. zweiten Steg 80, 80^{I}, 80" am ersten Elektromaschinengehäuse 4 bzw. am zweiten Elektromaschinengehäuse 6 ab. Eine rotorgetriebene Antriebswelle 16, 18 der jeweiligen elektrischen Maschine 3, 3^{I}, 3^{II}, 3^{III}, 3^{IV}, 5, 5^{I}, 5^{II}, 5^{III}, 5^{IV} dreht jeweils das Antriebssonnenrad 75, 75^{I}, 75^{II}, 75^{III}, 77, 77^{I}, 77^{III}. Ein Drehmoment wird von dem Antriebssonnenrad 75, 75^{I}, 75^{II}, 75^{III} 77, 77^{I}, 77^{III} über den Steg 79, 79^{I}, 79^{II}, 80, 80^{I}, 80^{II} jeweils auf eine mit dem Steg 79, 79^{I}, 79^{II}, 80, 80^{I}, 80" verbundene Zwischenwelle 83, 83^{I}, 83^{II}, 84, 84^{I}, 84^{II} geführt. Die Zwischenwelle 83, 83^{I}, 83^{II}, 84, 84^{I}, 84^{II} treibt über die Zahnradpaarung der Ausgangszahnradstufe 70, 70^{I}, 72, 72^{I}, 127 die jeweilige Abtriebswelle 27, 27^{I}, 27^{II}, 27^{III}, 27^{IV}, 27^{V}, 107^{I}, 107^{II} an. Die Abtriebswellen 27, 27^{I}, 27^{II}, 27^{III}, 27^{IV}, 107^{I}, 107^{II} werden in einer Abtriebswellenwälzlageranordnung 28, 28^{I}, 28^{II} an dem Getriebegehäuse 14, 14^{I}, 14^{II} geführt bzw. abgestützt. Die Abtriebswellenwälzlageranordnung 28, 28^{I}, 28^{II} ist eine ko-lineare Anordnung um eine gemeinsame Achse herum, die auch als Abtriebsachse 30, 30^{I} bezeichnet werden kann. Die Abtriebswellenwälzlageranordnung 28, 28^{I}, 28^{II} ist gegenüber der Wälzlageranordnung 20, 22 der Antriebsachsen 15, 15^{I}, 15^{II}, 15^{III}, 15^{IV}, 17, 17^{I}, 17^{III}, 17^{IV} versetzt. Damit kann der vorhandene Bauraum besonders effizient genutzt werden.

Über die Abtriebswelle 27, 27^{I}, 27^{II}, 27^{III}, 27^{IV}, 27^{V}, 107^{I}, 107^{II} ist ein Drehmoment übertragbar. Drehmoment gelangt über ein erstes Gelenk 33, 33^{I}, 33^{II} und ein zweites Gelenk 35, 35^{I} 35^{II} zu dem ersten Straßenrad 29, 29^{I}, 29^{II}. Das erste Gelenk 33, 33^{I}, 33^{II} und das zweite Gelenk 35, 35^{I} 35^{II} sind über eine erste Seitenwelle 41, 41^{I}, 41^{II} miteinander verbunden und somit einer ersten Einzelradaufhängung 45, 45^{I}, 45^{II} zugeordnet. Drehmoment gelangt über ein erstes Gelenk 33, 33^{I}, 33^{II} und ein zweites Gelenk 35, 35^{I} 35^{II} zu dem ersten Straßenrad 29, 29^{I}, 29^{II}. Das erste Gelenk 33, 33^{I}, 33^{II} und das zweite Gelenk 35, 35^{I} 35^{II} sind über eine erste Seitenwelle 41, 41^{I}, 41^{II} miteinander verbunden und somit einer ersten Einzelradaufhängung 45, 45^{I}, 45^{II} zugeordnet. Ein drittes Gelenk 37, 37^{I}, 37^{II} ist mit einem vierten Gelenk 39, 39^{I}, 39^{II} über eine zweite Seitenwelle 43, 43^{I}, 43^{II} verbunden und diese Teile 37, 37^{I}, 37^{II}, 39, 39^{I}, 39^{II}, 43, 43^{I}, 43" können somit als Komponenten einer zweiten Einzelradaufhängung 47, 47^{I}, 47^{II} bezeichnet werden.

Die Abtriebswelle 27, 27^{I}, 107 ist zumindest zweiteilig ausgeführt. Teile der Abtriebswelle 27^{III}, 27^{IV}, 27^{V}, 107^{I}, 107^{II}, 108, 108^{I}, 108^{II} werden auch als Abtriebswellensegmente 27^{III}, 27^{IV}, 27^{V}, 107^{I}, 107^{II} bezeichnet.

Wie in dem Beispiel von Figur 4 gezeigt ist, sind eine erste Abtriebswelle 27 und eine zweite Abtriebswelle 27^{I} voneinander getrennt. Beide Abtriebswellen 27, 27^{I} sind leistungsführende Wellen. Die erste Abtriebswelle 27 treibt das erste Straßenrad 29 an, weil sie ein Drehmoment aus der ersten elektrischen Maschine 3 überträgt. Die zweite Abtriebswelle 27^{I}, die im Wesentlichen ko-linear zur ersten Abtriebswelle 27 angeordnet ist, führt die Drehbewegung bzw. das Drehmoment aus einer zweiten elektrischen Maschine 5 über das dritte Gelenk 37 und das vierte Gelenk 39 dem zweiten Straßenrad 31 zu.

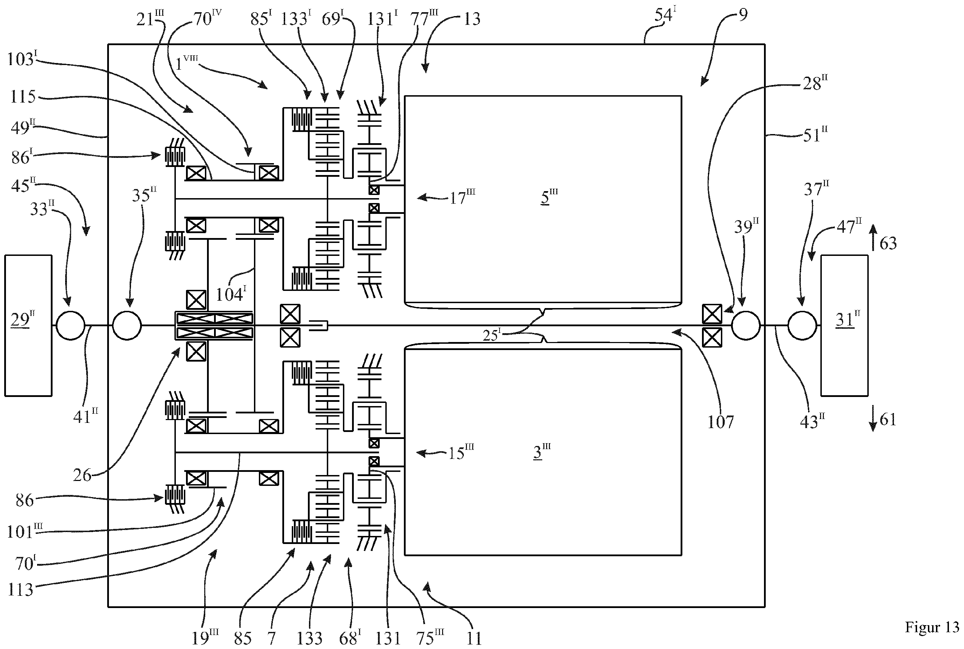

In den Beispielen, die in Figur 5 und in Figur 13 gezeigt sind, weist die Abtriebswelle 107 drei Segmente 27^{III}, 27^{IV}, 27^{V} auf. Mittels einer Steckverbindung 32 sind zwei Abtriebswellensegmente 27^{III}, 27^{IV} zu einer Momentenübertragungseinheit gekoppelt. Diese kann auch als leistungsführende Einheit bezeichnet werden. Neben der drehfesten Steckverbindung 32 befindet sich ein Koaxiallager 26, an dem eine entkoppelte Momenteneinleitung aus den Ausgangszahnradstufen 72^{I}, 74^{I} auf die Abtriebswelle 27" für einen Einzelradantrieb ermöglicht wird. Damit wird unter anderem der Zusammenbau erleichtert. Außerdem ist, wie auch in Figur 1 gezeigt ist, eine zweite Einzelradaufhängung 47^{I}, 47" vorhanden. Sowohl eine erste Abtriebsseite 7 als auch eine zweite Abtriebsseite 9 sind separat bzw. unabhängig voneinander antreibbar.

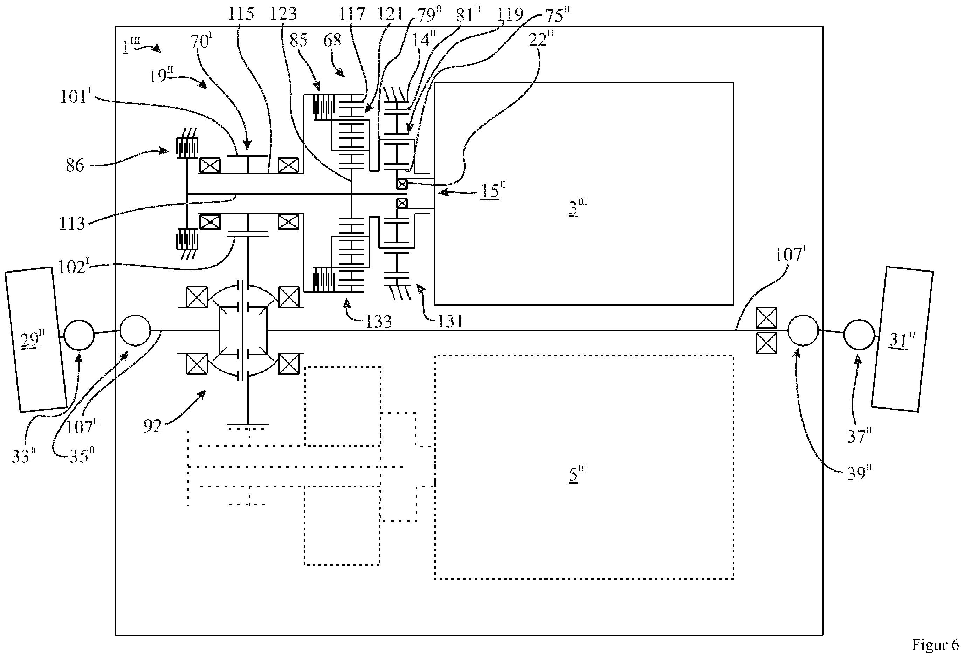

Figur 6 zeigt ein schaltbares Achsarrangement eines Antriebsaggregats 1^{III}, das mit zwei Elektromaschinen 3^{III}, 5^{III} ausgestattet ist. Die Elektromaschine 3^{III} treibt über die erste Antriebsachse 15" ein schaltbares Getriebearrangement mit den folgenden Schaltzuständen:

| Bremse | Kupplung | Betriebszustand |
|---|---|---|
| 0 | 0 | Leerlauf |
| 0 | 1 | 2. Gang |
| 1 | 0 | 1. Gang |
| 1 | 1 | Parksperre |

Hierdurch ist es möglich, die Straßenräder 29", 31" an der Abtriebswelle 107^{I}, 107" mit unterschiedlichen Geschwindigkeiten und Antriebsmomente zu betreiben.

Das in der Figur 6 gezeigte Antriebsaggregat 1^{III} verdeutlicht mehrere interessante Aspekte. Zum einen (erster Aspekt) kann anhand der Stellungen der Straßenräder 29^{II}, 31^{II} gesehen werden, dass, obwohl die Abtriebswellen 107^{I}, 107^{II} parallel zur Bremswelle 113 und parallel zur ersten Antriebsachse 15^{II} ausgerichtet sind, Sturz, Spur und Spreizung sowie Lenkrollradius und Radwinkel aufgrund der Gelenke 33^{II}, 35^{II}, 37^{II}, 39^{II} durch die Straßenräder 29^{II}, 31^{II} eingehalten werden können. Des Weiteren (zweiter Aspekt) ist anhand des Antriebsaggregats 1^{III} zu erkennen, dass die erste Elektromaschine 3^{III} betreibbar ist, während die zweite Elektromaschine 5^{III} stillgesetzt ist und somit für den Antriebsstrang (sozusagen) nicht vorhanden bzw. sichtbar ist. Obwohl über das Differential 92 auch die Getriebeelemente vor der zweiten Elektromaschine 5^{III} mitgeschleppt werden, wenn die zweite Elektromaschine 5^{III} nicht angetrieben wird, sondern nur die erste Elektromaschine 3^{II}, kann durch ein Öffnen der Kupplung 85 und der Bremse 86 der, einer der Elektromaschinen 3^{III}, 5^{III} gehörende Getriebeteil von der jeweiligen Elektromaschine 3^{II}, 5^{III} abgekoppelt werden (dritter Aspekt). Außerdem (vierter Aspekt) erlauben die Bremse 86 und die Kupplung 85 die Einnahme eines der vier oben aufgelisteten Betriebszustände.

Das Getriebe 19" besteht aus mehreren Stufen. Eine erste Stufe ist ein Planetengetriebe 131, das eine Antriebseingangsleistung über das Antriebssonnenrad 75^{II} erhält. Das Antriebssonnenrad 75^{II} ist auf einem Wälzlager gelagert. Das Eingangssonnenrad 75^{II} lagert gegenüber der Bremswelle 113. Eine zweite Getriebestufe stellt das Planetengetriebe 133 dar, das mit der Kupplung 85 ausgestattet ist. Das Planetengetriebe 68 besteht somit aus einem ersten Planetengetriebe 131 und einem zweiten Planetengetriebe 133. Eine weitere Getriebestufe des Getriebes 19^{III} stellt die Zahnradpaarung 70^{I} dar, die auch als "final drive" bezeichnet werden kann. Durch das Verhältnis der Zahnräder 101^{I}, 102^{I} bestimmt sich die Abtriebskonstante des "final drives". Das erste Zahnrad 101^{I} ist einstückig mit einer Zwischenwelle 115 realisiert. Die Zwischenwelle 115 umschließt koaxial die Bremswelle 113. Die Bremswelle 113 geht in das Schaltungssonnenrad 123 des Planetengetriebes 133 über, das die Schaltfunktion aufgrund der Kupplung 85 aufweist. Zu dem Planetengetriebe 133 gehört der zweite Planetensatz 121 sowie das Hohlrad 117. Zum Planetengetriebe 131 mit der Sonnenradeinleitung gehört der erste Planetensatz 119 sowie ein erstes Ringrad 81^{II}. Das Ringrad 81^{II} ist an dem Getriebegehäuse 14" festgesetzt. Über den ersten Steg 79" erfolgt die drehmomentschlüssige Kopplung des Planetengetriebes 131 mit dem Planetengetriebe 133.

Die Kupplung 85 und die Bremse 86 können in Eingriff und außer Eingriff gebracht werden. Somit sind mit den beiden Schaltelementen Kupplung 85 und Bremse 86 insgesamt vier verschiedene Schaltzustände für das Getriebe 19" hinter der Elektromaschine 3^{III} einstellbar. Diese vier möglichen Zustände sind überblicksmäßig in oben stehender Tabelle zusammengefasst und können als Leerlauf, zweiter Gang, erster Gang und Parksperrenfunktion adressiert werden.

Durch die Planetengetriebestufen, realisiert durch das Planetengetriebe 131 und durch das Planetengetriebe 133, ist eine sehr breite Spanne von möglichen Übersetzungsverhältnissen (je nach Zustand der Schaltelemente Kupplung 85 und/oder Bremse 86) abdeckbar.

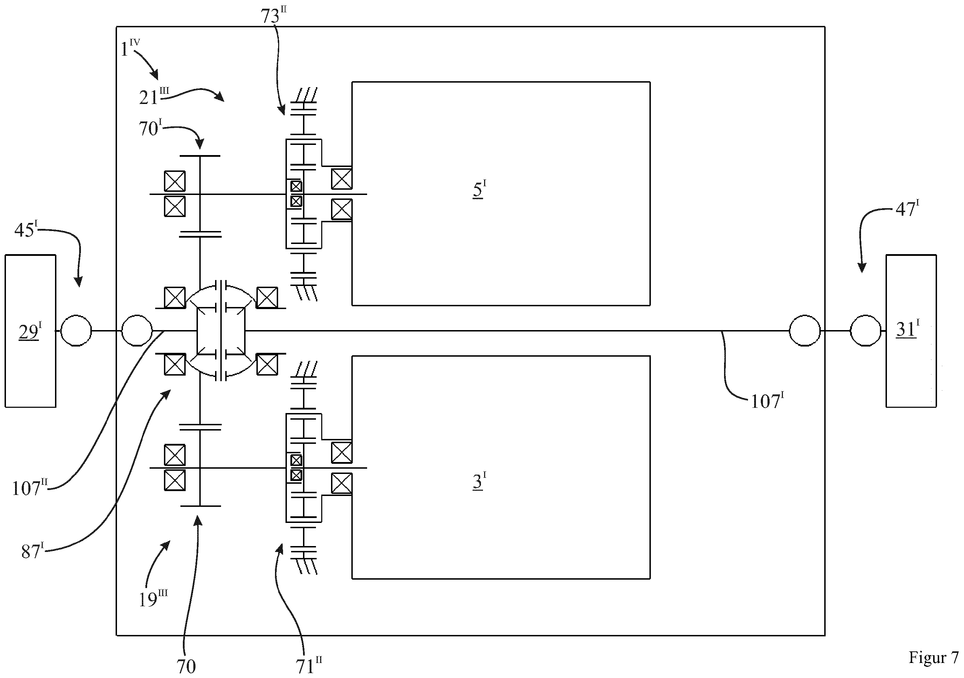

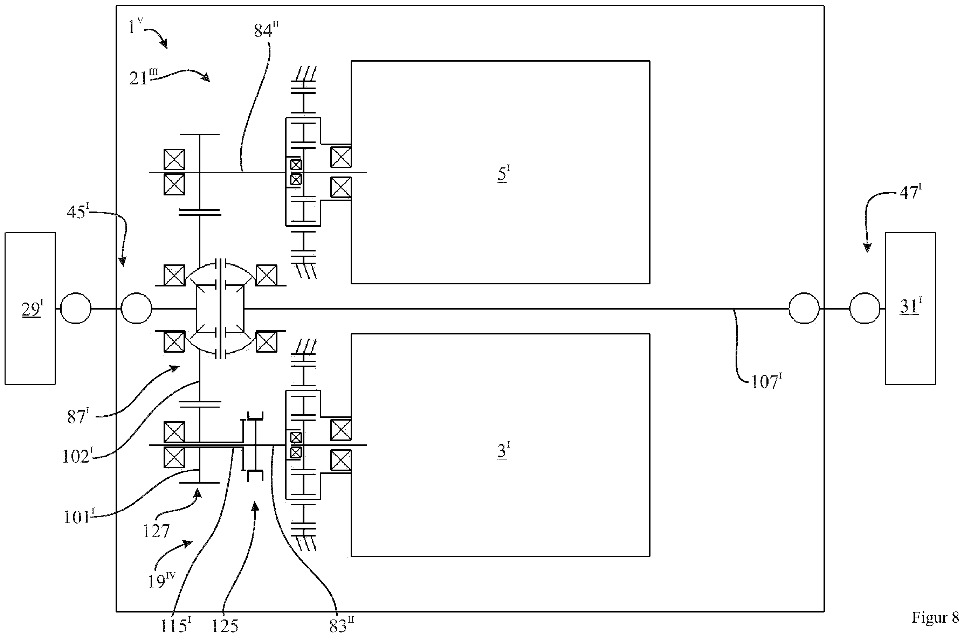

Das Antriebsaggregat 1^{IV} gemäß Figur 7 und das Antriebsaggregat 1^{V} gemäß Figur 8 weisen eine ähnliche Anordnung, zu der auch die Elektromaschinen 3^{I}, 5^{I} gehören, wie das Antriebsaggregat 1^{II} mit den Elektromaschinen 3", 5" in Figur 5 auf. Abweichend erfolgt aber bei den Antriebsaggregat 1^{IV}, 1^{V} eine Zusammenführung des Drehmoments aus beiden Elektromaschinen 3^{I}, 5^{I} und eine Verteilung auf die ersten Abtriebswellen 107^{I}, 107^{II} über ein Differential 87^{I}. D. h., das Konzept nach den Figuren 7 und 8 ist vergleichbar mit einem Konzept gemäß dem Antriebsaggregat 1 nach Figur 3. Eine Besonderheit des Antriebsaggregats 1^{V} gemäß Figur 8 besteht darin, dass das erste Getriebe 19^{IV} an der ersten Zwischenwelle 83^{II} ein Wellenschaltelement 125 aufweist. Mit dem Wellenschaltelement 125 ist die erste Zwischenwelle 83" von einer Hohlwelle 115^{I} entkoppelbar oder im entkoppelten Zustand daran ankoppelbar. Durch das Wellenschaltelement 125 kann die Elektromaschine 3^{I} von der Zahnradpaarung 127 abgekoppelt werden. Die Hohlwelle 115^{I} trägt ein erstes Zahnrad 101^{I}. Das erste Zahnrad bildet mit einem zweiten Zahnrad 102^{I}, das mit dem Differential 87^{I} verbunden ist, eine Zahnradpaarung 127. Wenn das Antriebsaggregat nur mit der zweiten Elektromaschine 5^{I} betrieben wird, so erlaubt das Wellenschaltelement 125 einen in Bezug auf die erste Elektromaschine 3^{I} und deren Planetengetriebe 71^{II} weitgehend schleppmomentfreien und somit energieeffizienteren Betrieb. Treibt die zweite Elektromaschine 5^{I} das Differential 87^{I} an, so kann durch Betätigen des Wellenschaltelements 125 die erste Elektromaschine 3^{I} aufgeschaltet werden. In der anderen Schaltstellung des Wellenschaltelements 125 kann die Elektromaschine 3^{I} weggeschaltet werden. So ist es möglich, nur eine Elektromaschine, nämlich die zweite Elektromaschine 5^{I} zu betreiben, während die erste Elektromaschine 3^{I} tot gesetzt ist. Gehören die Elektromaschinen 3^{I}, 5^{I} zu unterschiedlichen Leistungsklassen, ist es möglich, aufgrund des Wellenschaltelements 125, von dem ein gleichartiges auch in dem Strang der zweiten Elektromaschine 5^{I} verbaut sein kann (nicht graphisch dargestellt), nur eine der beiden Elektromaschinen 3^{I}, 5^{I} zu betreiben und die Elektromaschine 3^{I}, 5^{I}, die nicht in der richtigen Leistungsklasse ist, (vorrübergehend) tot zu setzen.

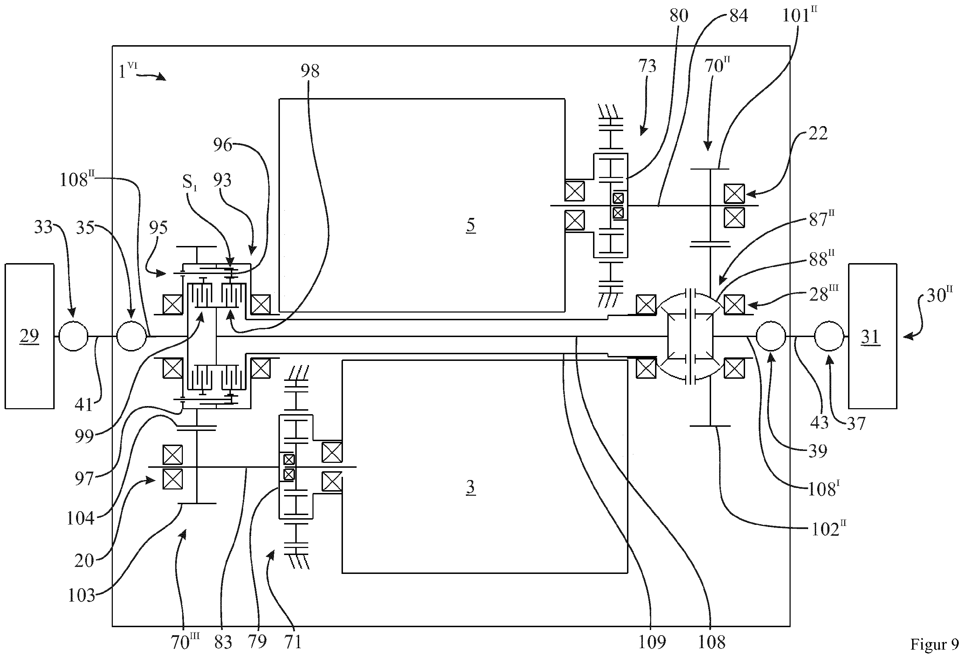

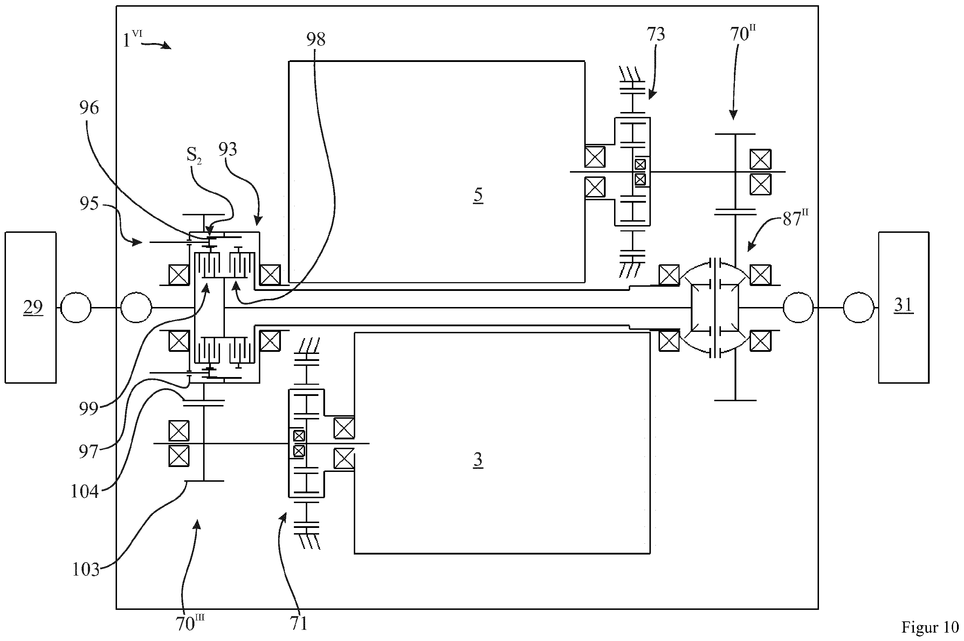

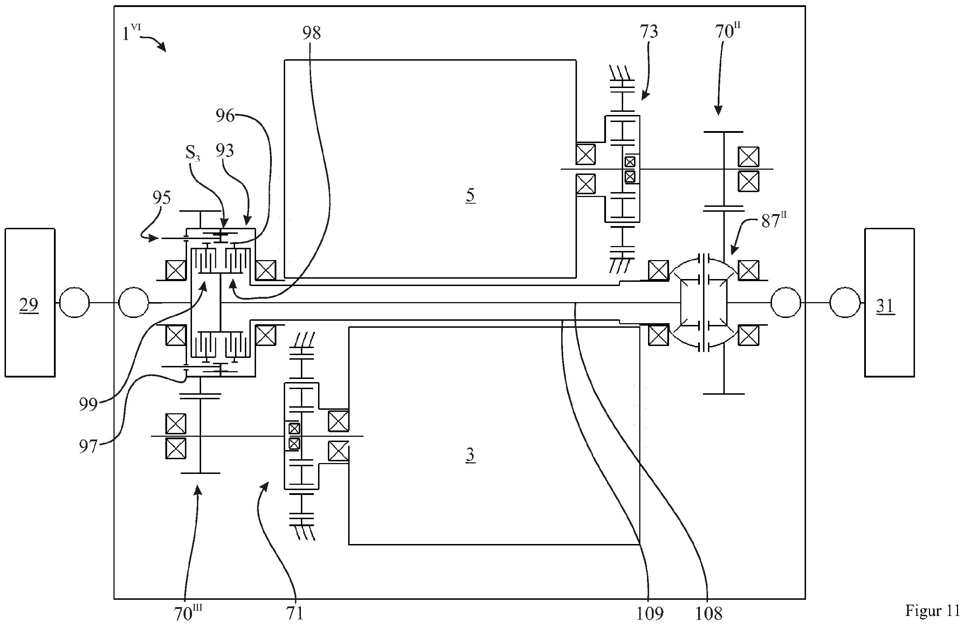

Die Figuren 9, 10 und 11 zeigen eine erste Ausführungsvariante eines zwischen Einzelradantrieb und Achsantrieb umschaltbaren Antriebsaggregats 1^{VI} in verschiedenen Schaltzuständen des Klauenelements 96. Figur 9 zeigt das Klauenelement 96, mit dem verschiedene Zustände geschaltet werden können, in einer ersten Schaltstellung S₁. Die Schaltstellung S₁ kann auch als Schaltstellung mit Verbindung zum ersten Lamellenpaket 98 bezeichnet werden. Die Figur 10 zeigt das Klauenelement 96 in einer zweiten Schaltstellung S₂. Die zweite Schaltstellung S₂ zeigt das Klauenelement 96 in einer Schaltstellung, in der es in Verbindung mit dem zweiten Lamellenpaket 99 steht. Die Figur 11 zeigt das Antriebsaggregat 1^{VI} in einer dritten Schaltstellung S₃, die als Mittenstellung bezeichnet werden kann.

Durch die verschiedenen Schaltstellung S₁, S₂, S₃ des Klauenelements 96, wodurch sich eines der beiden Lamellenpakete 98, 99 mit einem seiner Anschlüsse in einem kraftübertragenen Schluss befindet, wird ein von einer der Elektromaschinen 3, 5 erzeugtes Drehmoment in unterschiedlicher Art und Weise auf die Straßenräder 29, 31 gebracht. Die Straßenräder 29, 31 sind Teile der Antriebsachse 30^{II}.

Wie in Figur 9 zu sehen ist, sind die Straßenräder 29, 31 über Seitenwellen 41, 43 und zwischengeschaltete Gelenke 33, 35, 37, 39 jeweils mit einer der Abtriebswellen 108^{I}, 108" verbunden. Die Abtriebswelle setzt sich tatsächlich aus drei Abtriebs(-teil-)wellen 108, 108^{I}, 108" zusammen. Zwischen den einzelnen Teilen der Abtriebswelle 108, 108^{I}, 108^{II} gibt es zum einen die Lamellenkupplung 93 und zum anderen das Differential 87^{II}, das als Kegeldifferential in dem Ausführungsbeispiel gem. den Figuren 9, 10, 11 ausgeführt ist.

Das Antriebsaggregat 1^{VI} ist mit seinen beiden Antriebssträngen auf Basis der Elektromaschinen 3, 5 bis zur Zahnradpaarung 70^{II}, 70^{III} identisch aufgebaut.

Die erste Elektromaschine 3 treibt das erste Planetengetriebe 71 über seine Sonne als Eingangsrad an. Über den ersten Steg 79 des ersten Planetengetriebes 71 wird das Drehmoment verstärkt und die Drehbewegung wird in der Drehzahl reduziert. Die Drehbewegung wird auf die erste Zwischenwelle 83 gegeben. Die erste Zwischenwelle 83 ist zugleich eine Trägerwelle für eines der Zahnräder der Zahnradpaarung 70^{III}. Die Zwischenwelle 83 ist über die Wälzlageranordnung 20 gelagert. Als erstes Zahnrad 103 der Zahnradpaarung 70^{III} dient ein Stirnradzahnrad, das benachbart zu der Wälzlageranordnung 20 auf der Zwischenwelle 83 platziert ist. Von dem ersten Zahnrad 103 geht die Drehmomentenübertragung auf das zweite Zahnrad 104, das Teil des Kupplungsgehäuses 97 ist. Das Kupplungsgehäuse 97 ist das Gehäuse der Lamellenkupplung 93.

Parallel bzw. vorgeschaltet zu der Lamellenkupplung 93 gibt es das Klauenelement 96. Das Klauenelement 96 ist für das Schalten der verschiedenen Zustände des Antriebsaggregats 1^{VI} in ihre unterschiedlichen Schaltstellungen S₁, S₂, S₃ ausgelegt. Hierfür gibt es einen mechanisch zu betätigenden Schaltarm 95.

Außerdem werden Zustände des Antriebsaggregats 1^{VI} über die Lamellenkupplung 93 eingestellt.

Die zweite Elektromaschine 5 hat ausgangsseitig ebenfalls ein Planetengetriebe, das - aufgrund der gewünschten Gleichteilauslegung - identisch zu dem ersten Planetengetriebe 71 realisiert ist. Das zweite Planetengetriebe 73 und das erste Planetengetriebe 71 sind zwillingspaarartig ausgelegt. Das zweite Planetengetriebe 73 führt abtriebsseitig auf einen zweiten Steg 80, der in die zweite Zwischenwelle 84 übergeht. Auf der zweiten Zwischenwelle 84 sitzt das dritte Zahnrad 101". Das dritte Zahnrad 101" ist in kämmender Anordnung mit dem vierten Zahnrad 102^{II} in dem Getriebe des Antriebsaggregats 1^{VI} eingebaut. Auch die zweite Zwischenwelle 84 ist über eine zweite Wälzlageranordnung 22 frei drehbeweglich gelagert. Das vierte Zahnrad 102^{II} ist Teil des Differentials 87^{II}. Genauer erläutert ist anzugeben, dass das vierte Zahnrad 102" in den Korb 88" des Differentials 87^{II} einmündet. Das Differential 87^{II} ist über Abtriebswellenwälzlageranordnungen 28^{III} in dem Gehäuse des Antriebsaggregats 1^{VI} gelagert.

Die Abtriebswelle 108 liegt, wenigstens teilweise, im Inneren der zweiten Abtriebswelle 109. Die zweite Abtriebswelle 109 ist eine Hohlwelle, die die erste Abtriebswelle 108 aufnehmen kann.

Figur 10 zeigt das Antriebsaggregat 1^{VI} mit seinen beiden Elektromaschinen 3, 5 in einem Schaltzustand S₂. In dem Schaltzustand S₂ ist der Schaltarm 95 des Klauenelements 96 in der Position, dass von dem Kupplungsgehäuse 97 eine kraft- und formschlüssige Verbindung auf den einen Teil der Lamellenkupplung 93, dem zweiten Lamellenpaket 99 stattfindet. Das erste Lamellenpaket 98 ist bezüglich seiner Außenlamellen aufgrund der Schaltstellung des Schaltarms 95 entkoppelt.

Der Elektromotor 3 kann ein Drehmoment über das Planetengetriebe 71 auf die Zahnradpaarung 70^{III} übertragen. Die Zahnradpaarung 70^{III} setzt sich aus dem ersten Zahnrad 103 und dem zweiten Zahnrad 104 zusammen. Das zweite Zahnrad 104 ist Teil des Kupplungsgehäuses 97.

Die zweite Elektromaschine 5 treibt ihr Abtriebsmoment in das zweite Planetengetriebe 73, um über die Zahnradpaarung 70" das Drehmoment auf das Differential 87^{II} weiterzugeben.

Befindet sich nun das Lamellenpaket 99 der Lamellenkupplung 93 in einer offenen, das heißt in einem nicht-übertragenden Zustand und befindet sich das Lamellenpaket 98 in einer geschlossenen, das heißt in einem übertragenden Zustand, so ist ein Einzelradantrieb in dem Antriebsaggregat 1^{VI} geschaltet. Die erste Elektromaschine 3 treibt das erste Straßenrad 29 an. Die zweite Elektromaschine 5 treibt das zweite Straßenrad 31 an.

Figur 11 zeigt das Antriebsaggregat 1^{VI} in einer weiteren Schaltstellung, der sogenannten Mittenstellung S₃. Der Schaltarm 95 hat das Klauenelement 96 in eine mittlere Position zwischen den Lamellenpaketen 98 und 99 eingestellt.

In der in Figur 11 gezeigten Schaltstellung S₃ ist idealerweise das Lamellenpaket 99 in einer geschlossenen Stellung. In dieser Schaltstellung ist idealerweise das Lamellenpaket 98 in einer offenen Schaltstellung. Ein von der Elektromaschine 3 eingeleitetes Drehmoment, welches über die Planetengetriebestufe 71 und die Zahnradpaarung 70^{III} geführt wird, gelangt über die äußere Hohlwelle 109 auf das Differential 87^{II}. Von dem Differential 87^{II} können beide Räder 29, 31 deswegen angetrieben werden, weil das Lamellenpaket 99 eine Drehmomentenübertragung auch auf das erste Straßenrad 29 zulässt. Wird die Lamellenkupplung 93 durch ihr Lamellenpaket 99 in eine insgesamt vorhandene geöffnete Stellung gebracht, d. h., während das Lamellenpaket 98 in der geöffneten Stellung ist, wird das Lamellenpaket 99 in eine geöffnete Stellung gebracht, kann sich das Differential 87^{II} nicht mehr an beiden seiner Stützräder abstützen und es ist kein Drehmoment mehr auf die Straßenräder wie dem Straßenrad 31 zu leiten. Bei einem solchen Betrieb dreht die Elektromaschine 5 leer.

Werden beide Elektromaschinen 3, 5 betrieben, so leiten beide Elektromaschinen über ihre Planetengetriebe 71, 73 und ihre Zahnradpaarungen 70^{II}, 70^{III} ihr jeweiliges Drehmoment auf das Differential 87^{II}. Von dem Differential 87^{II} wird das Drehmoment auf die entsprechenden Straßenräder 29, 31 weitergeleitet.

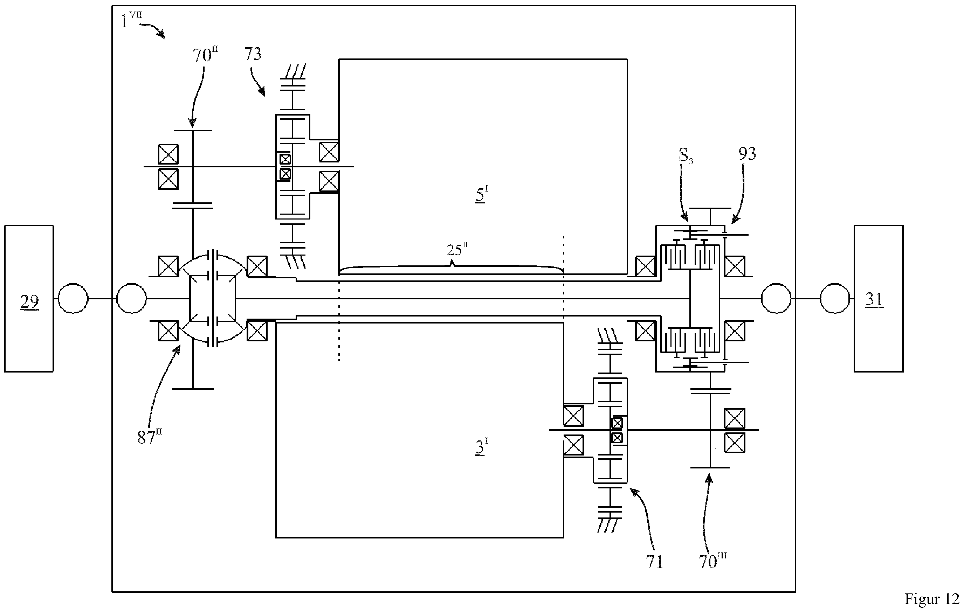

Figur 12 zeigt ein Antriebsaggregat 1^{VII}, das in weiten Teilen dem Antriebsaggregat 1^{VI} nach den Figuren 9, 10 und 11 entspricht. Die weiter oben stehenden Erklärungen zu dem Antriebsaggregat 1^{VI} können auf das Antriebsaggregat 1^{VII} übertragen werden.

Durch die spiegelbildliche Anordnung der Lamellenkupplung 93 und des Differentials 87^{II} findet eine Weiterleitung auf die Räder 29, 31 genau in spiegelbildlicher Ausgestaltung zu den zuvor beschriebenen Schaltzuständen statt, so dass Figur 12 in dem Schaltzustand 3 (Bezugszeichen S₃) beispielhaft dargestellt ist, wodurch eine Leistungsaddition bei einem Achsenantrieb (im Gegensatz zu der weiteren Schaltmöglichkeit des Einzelradantriebs) möglich ist.

Der Überlappungsbereich 252^{I} der beiden Elektromaschinen 3^{I}, 5^{I} kann in Abhängigkeit des Radabstands zwischen den Straßenrädern 29, 31 unter Berücksichtigung des für die Planetengetriebe 71, 73 und die Zahnradpaarungen 70^{II}, 70^{III} benötigten Bauraums ausgelegt werden. Bei einer Anordnung, so wie sie in Figur 12 dargestellt ist, steht die gesamte Fahrzeugbreite zur Verfügung. Die Fahrzeugbreite wird nur durch die Lamellenkupplung 93 und das Differential 87^{II} geschmälert. Die gesamte übrige Strecke von einer Seite des Fahrzeugs zur anderen Seite des Fahrzeugs kann von Wellen und Elektromotoren 3^{I}, 5^{I} genutzt werden.

Figur 13 zeigt ein Antriebsaggregat 1^{VIII}, das mit zwei Elektromaschinen 3^{III}, 5^{III} ausgestattet durch die Getriebeanordnung 19", 21" aus Planetengetrieben 68^{I}, 69^{I}, wobei sich die Planetengetriebe 68^{I}, 69^{I} aus zwei in Serie verschalteten einzelnen Planetengetrieben 131, 131^{I}, 133, 133^{I} zusammensetzen, und Ausgangszahnradstufen 70^{I}, 70^{IV} aufgrund der Schaltelemente wie den Kupplungen 85, 85^{I} und Bremsen 86, 86^{I} insgesamt acht verschiedene Gänge bietet, von denen vier Gänge unterschiedlich schnelle Gänge sind. Einige der anderen Gänge sind keine Gänge im klassischen Sinne, sondern stellen besondere Zustände dar, wie z. B. eine Parksperre in jedem Strang mit Elektromotor 3^{II}, 5^{III} oder ein Leerlauf in jedem Strang mit Elektromotor 3^{III}, 5^{III}.

Die Ausgangszahnradstufen 70^{I}, 70^{IV} weisen jeweils auf der Antriebsachse 15^{III}, 17^{III} ein Zahnrad 103^{I}, 101^{III} auf, das je nach Zählung als erstes Zahnrad oder drittes Zahnrad bezeichnet werden kann. Das Zahnrad 103^{I} steht mit einem weiteren Zahnrad 104^{I} im Eingriff, das auf der Abtriebswelle 107 angeordnet ist. Die Antriebsachsen 15^{III}, 17^{III} sind, insbesondere im Hinblick auf den Bauraum, ähnlich gestaltet wie die Antriebsachse 15" in Figur 6.

Aufgrund der Drehrichtung der Elektromaschinen 3^{III}, 5^{III} bestimmt sich die Fahrtrichtung 61, 63 der Straßenräder 29^{II}, 31^{II}.

Figur 14 zeigt in einer Schemadarstellung ein schaltbares Antriebsaggregat 1^{IX} mit zwei Elektromaschinen 3^{IV}, 5^{IV}, bei denen aufgrund des Differentials 87^{I} mit seinem Korb 88^{I} die Abtriebswellen 107^{I}, 107^{II} als Wellen einer gemeinsamen Achse betrieben werden. In das Differential 87^{I} können Drehmomente aus den beiden Elektromaschinen 3^{IV}, 5^{IV} eingeleitet werden. Die Drehmomenteinleitung erfolgt über eine Zahnradstufe 70^{I}, 70^{IV}. Es kann auch gesagt werden, dass die Drehmomenteinleitung von den in Fahrtrichtung auf gegenüberliegenden Seiten des Differentials 87^{I} beabstandet, insbesondere nebeneinander, angeordneten Antriebsachsen 15^{IV}, 17^{IV} erfolgt. Lässt sich das Differential 87^{I}, z. B. so wie in Figur 9 oder Figur 12 dargestellt, aus dem Antriebsstrang (wirktechnisch bzw. wirkfunktionell) herausnehmen, kann ein Antriebsaggregat 1^{IX} nach Figur 14 wahlweise bzw. wechselweise als Einzelradantrieb und als Achsantrieb benutzt werden. Aufgrund der Planetengetriebe 68, 69 in dem ersten Getriebe 19" und in dem zweiten Getriebe 21" können unterschiedliche Fahrgänge eingelegt werden. Außerdem kann ähnlich zu oben stehender Tabelle das Antriebsaggregat 1^{IX} in einen Parksperrenmodus gebracht werden. Für Leerlaufuntersuchungen können die Elektromaschinen 3^{IV}, 5^{IV} in einem Leerlaufbetrieb aufgrund der Getriebe 19", 21" geschaltet und somit gebracht werden. Somit ist es möglich, die Straßenräder 29", 31" mit unterschiedlichen Drehgeschwindigkeiten zu betreiben, das Fahrzeug mit einem entsprechenden Antriebsaggregat 1^{IX} stillzusetzen oder leer laufen zu lassen. Außerdem sind Energiesparbetriebsweisen bei einem Antriebsaggregat 1^{IX} möglich, indem eine der Elektromaschinen 3^{IV}, 5^{IV} entkoppelt wird.

Die in den einzelnen Figuren gezeigten Ausgestaltungsmöglichkeiten lassen sich auch untereinander in beliebiger Form verbinden und/oder kombinieren.

Unter anderem zeigt Figur 1 in Zusammenschau mit Figur 14 ein Verhältnis eines Rotordurchmessers 10, 10^{I} zu einer Blechpaketlänge 129.

Durch die in den Figuren, Figur 1 bis Figur 11, vorgestellte Bauanordnung ergibt sich ein längerer Bauraum für einen Deckungsbereich bzw. Überlappungsbereich 25, 25^{I} (siehe Figur 3 sowie Figur 5), insbesondere der Elektromaschinen 3, 3^{I}, 3^{II}, 3^{III}, 3^{IV}, 5, 5^{I}, 5^{II}, 5^{III}, 5^{IV}.

### Bezugszeichenliste

- 1, 1^{I}, 1^{II}, 1^{III}, 1^{IV}, 1^{V}, 1^{VI},: Antriebsaggregat
- 1^{VII}, 1^{VIII}, 1^{IX} 3, 3^{I}, 3^{II}, 3^{III}, 3^{IV}: erste Elektromaschine
- 4: erstes Elektromaschinengehäuse
- 5, 5^{I}, 5^{II}, 5^{III}, 5^{IV}: zweite Elektromaschine
- 6: zweites Elektromaschinengehäuse
- 7: erste Abtriebsseite
- 8, 8^{I}: mittlerer Bereich
- 9: zweite Abtriebsseite
- 10, 10^{I}: Durchmesser, insbesondere Rotordurchmesser
- 10^{II}: Außendurchmesser, insbesondere der Abtriebswelle
- 11: erster elektrischer Bereich, insbesondere erster Wicklungsbereich
- 12: Abstand, insbesondere erste Elektromaschine zu zweiter Elektromaschine
- 13: zweiter elektrischer Bereich, insbesondere zweiter Wicklungsbereich
- 14, 14^{I}, 14^{II}: Getriebegehäuse
- 15, 15^{I}, 15^{II}, 15^{III}, 15^{IV}: erste Antriebsachse
- 16: erste Antriebswelle, insbesondere von der Elektromaschine angetriebene Welle
- 17, 17^{I}, 17^{III}, 17^{IV}: zweite Antriebsachse
- 18: zweite Antriebswelle, insbesondere von der Elektromaschine angetriebene Welle
- 19, 19^{I}, 19^{II}, 19^{III}, 19^{IV}: erstes Getriebe
- 20: erste Wälzlageranordnung
- 20^{I}: erstes Wälzlager
- 21, 21^{I}, 21^{II}, 21^{III}.: zweites Getriebe
- 22: zweite Wälzlageranordnung
- 22^{I}, 22^{II}: erstes Wälzlager
- 23, 23^{I}, 23^{II}, 23^{III}: Abstand, insbesondere der Antriebsachsen
- 24, 24^{I}: Versatz, insbesondere Dreieckskonfiguration der Abtriebswelle zu den Antriebsachsen
- 25, 25^{I}, 25^{II}: Deckungsbereich bzw. Überlappungsbereich, insbesondere der Elektromaschinen
- 26, 26^{I}: Koaxiallager
- 27, 27^{I}, 27^{II}: Abtriebswelle, insbesondere Radantriebswelle
- 27^{III}: erstes Abtriebswellensegment
- 27^{IV}: zweites Abtriebswellensegment
- 27^{V}: drittes Abtriebswellensegment
- 28, 28^{I}, 28^{II}, 28^{III}: Abtriebswellenwälzlageranordnung
- 29, 29^{I}, 29^{II}: erstes Straßenrad, insbesondere Antriebsrad
- 30, 30^{I}, 30^{II}: Abtriebsachse
- 31, 31^{I}, 31^{II}: zweites Straßenrad, insbesondere Antriebsrad
- 32: Steckverbindung, insbesondere drehfeste Wellenverbindung
- 33, 33^{I}, 33^{II}: erstes Gelenk
- 35, 35^{I}, 35^{II}: zweites Gelenk
- 37, 37^{I}, 37^{II}: drittes Gelenk
- 39, 39^{I}, 39^{II}: viertes Gelenk
- 41, 41^{I}, 41^{II}: erste Seitenwelle
- 43, 43^{I}, 43^{II}: zweite Seitenwelle
- 45, 45^{I}, 45^{II}: erste Einzelradaufhängung
- 47, 47^{I}, 47^{II}: zweite Einzelradaufhängung
- 49, 49^{I}, 49^{II}: erste randständige Versteifung, insbesondere linker Holm
- 51, 51^{I}, 51^{II}: zweite randständige Versteifung, insbesondere rechter Holm
- 53, 53^{I}: Bodenplatte, insbesondere des Fahrgastraums
- 54, 54^{I}: Bodenplatte, insbesondere Spritzschutz
- 61: erste Fahrtrichtung
- 63: zweite Fahrtrichtung
- 65, 65^{I}: erster Statorradius
- 67, 67^{I}: zweiter Statorradius
- 68, 68^{I}: Planetengetriebe, insbesondere erstes Planetengetriebe
- 69, 69^{I}: Planetengetriebe, insbesondere zweites Planetengetriebe
- 70, 70^{I}, 70^{II}: Zahnradpaarung, insbesondere als Antrieb des Differentials
- 70^{III}: Zahnradpaarung, insbesondere als Antrieb des Kupplungsgehäuses
- 71, 71^{I}, 71^{II}: erstes Planetengetriebe
- 72, 72^{I}: erste Ausgangszahnradstufe, insbesondere Zahnradpaarung
- 73, 73^{I}, 73^{II}: zweites Planetengetriebe
- 74, 74^{I}: zweite Ausgangszahnradstufe, insbesondere Zahnradpaarung
- 75, 75^{I}, 75^{II}, 75^{III}: erstes Antriebssonnenrad
- 77, 77^{I}, 77^{III}: zweites Antriebssonnenrad
- 79, 79^{I}, 79^{II}: erster Steg
- 80, 80^{I}, 80^{II}: zweiter Steg
- 81, 81^{I}, 81^{II}: erstes Ringrad, insbesondere Hohlrad
- 82, 82^{I}, 82^{II}: zweites Ringrad, insbesondere Hohlrad
- 83, 83^{I}, 83^{II}: erste Zwischenwelle
- 84, 84^{I}, 84^{II}: zweite Zwischenwelle
- 85, 85^{I}: Kupplung, insbesondere Reibelement
- 86, 86^{I}: Bremse
- 87, 87^{I}, 87^{II}: Differential, insbesondere Kegeldifferential
- 88, 88^{I}, 88^{II}: Korb
- 89: Bolzen für Ausgleichsräder
- 90, 90^{I}: Tellerrad
- 91, 91^{I}: Ausgleichsrad
- 92: Differential, insbesondere Planetendifferential
- 93: Lamellenkupplung
- 95: Schaltarm
- 96: Klauenelement zum Schalten
- 97: Kupplungsgehäuse
- 98: erstes Lamellenpaket
- 99: zweites Lamellenpaket
- 101, 101^{I}: erstes Zahnrad
- 101^{II}, 101^{III}: drittes Zahnrad
- 102, 102^{I}: zweites Zahnrad, insbesondere Korbzahnrad
- 102": viertes Zahnrad
- 103, 103^{I}: erstes Zahnrad
- 104, 104^{I}: zweites Zahnrad
- 107, 107^{I}, 107^{II}: erste Abtriebswelle, insbesondere Radantriebswelle
- 108, 108^{I}, 108: ^{II} erste Abtriebswelle, insbesondere Segment einer Abtriebswelle, wie eine Radantriebswelle
- 109: zweite Abtriebswelle, insbesondere Hohlwelle
- 113: Bremswelle
- 115, 115^{I}: Zwischenwelle, insbesondere Hohlwelle
- 117: Hohlrad, insbesondere weiteres Ringrad
- 119: erster Planetensatz
- 121: zweiter Planetensatz
- 123: Schaltungssonnenrad
- 125: Wellenschaltelement
- 127: Zahnradpaarung
- 129: Blechpaketlänge
- 131, 131^{I}: Planetengetriebe, insbesondere ein Planetengetriebe mit fixiertem Hohlrad und Sonnenradeinleitung
- 133, 133^{I}: Planetengetriebe, insbesondere mit einer Kupplung ausgangsseitig am Steg gegenüber Ringrad

- A₁: erste tangential anliegende Gerade
- A₂: zweite tangential anliegende Gerade
- B₁, B₁^{I}: erste Schnittgerade
- B₂, B₂^{I}: zweite Schnittgerade
- B₃^{I}: dritte Schnittgerade
- B₄^{I}: vierte Schnittgerade
- F: Fläche
- T: Tangentialpunkt
- S₁: erste Schaltstellung
- S₂: zweite Schaltstellung
- S₃: Mittenstellung

## Patentansprüche

1. Antriebsaggregat (1, 1^{I}, 1^{II}, 1^{III} 1^{IV}, 1^{V}, 1^{VI}, 1^{VII}, 1^{VIII}, 1^{IX})
mit einer ersten Elektromaschine (3, 3^{I}, 3^{II}, 3^{III}, 3^{IV}) und einer zweiten Elektromaschine (5, 5^{I}, 5^{II}, 5^{III}, 5^{IV}),
die eine Abtriebsseite (7, 9) und einen Wicklungsbereich (11, 13) haben,
für eine Antriebsleistung auf Straßenräder, wie ein Einzelradantrieb, an einer gleichen Achse eines Kraftfahrzeugs,
wobei jede der mit einer Antriebsachse (15, 15^{I}, 15^{II}, 15^{III}, 15^{IV}, 17, 17^{I}, 17^{III}, 17^{IV}) ausgestatteten Elektromaschinen (3, 3^{I}, 3^{II}, 3^{III}, 3^{IV}; 5, 5^{I}, 5^{II}, 5^{III}, 5^{IV}) eine Antriebswelle (16, 18) aufweist,
über die jeweils ein Antriebsdrehmoment in ein erstes Getriebe (19, 19^{I}, 19^{II}, 19^{III}, 19^{IV}), antreibbar durch die erste Elektromaschine (3, 3^{I}, 3^{II}, 3^{III}, 3^{IV}),
und in ein zweites Getriebe (21, 21^{I}, 21^{II}, 21^{III}),
antreibbar durch die zweite Elektromaschine (5, 5^{I}, 5^{II}, 5^{III}, 5^{IV}),
einleitbar sind,
wobei die Antriebsachsen (15, 15^{I}, 15^{II}, 15^{III}, 15^{IV}, 17, 17^{I}, 17^{III}, 17^{IV}) parallel, aber versetzt zueinander verlaufen,
**dadurch gekennzeichnet, dass**
die zwei Elektromaschinen (3, 3^{I}, 3^{II}, 3^{III}, 3^{IV}, 5, 5^{I}, 5^{II}, 5^{III}, 5^{IV}) wenigstens in Bezug auf ihre Wicklungsbereiche (11, 13) in wenigstens teilweise überlappender Weise und für einen Einbau in einen Bauraum eines Fahrzeugs angeordnet sind, in dem die Wicklungsbereiche (11, 13) entlang einer Fahrzeuglängsachse fluchtend zwischen einem ersten, den Bauraum begrenzenden Längsträger und einem zweiten, den Bauraum begrenzenden Längsträger anzusiedeln sind,
wobei an wenigstens einer Abtriebsseite (7, 9) einer der Elektromaschinen (3, 3^{I}, 3^{II}, 3^{III}, 3^{IV}; 5, 5^{I}, 5^{II}, 5^{III}, 5^{IV}), die für ein Weiterleiten von Antriebsleistung auf zwei Radantriebswellen (27, 27^{I}, 27^{II}, 27^{III}, 27^{IV}, 27^{V}, 107, 107^{I}, 107^{II}, 108, 108^{I}, 108^{II}, 109) gestaltet sind, ein Planetengetriebe (68, 68^{I}, 69, 69^{I}, 71, 71^{I}, 71^{II}, 73, 73^{I}, 73^{II}, 131, 131^{I}, 133, 133^{I}) angeschlossen ist, das die auf eines der Straßenräder (29, 29^{I}, 29^{II}, 31, 31', 31") gebrachte Geschwindigkeit der Elektromaschine (3, 3^{I}, 3^{II}, 3^{III}, 3^{IV}; 5, 5^{I}, 5^{II}, 5^{III}, 5^{IV}) reduziert,
wobei die Radantriebswellen (27, 27^{I}, 27^{II}, 27^{III}, 27^{IV}, 27^{V}, 107, 107^{I}, 107^{II}, 108, 108^{I}, 108^{II}, 109), die je Teil eines Getriebes (19, 19^{I}, 19^{II}, 19^{III}, 19^{IV}; 21, 21^{I}, 21^{II}, 21^{III}) sind, zwischen den Antriebsachsen (15, 15^{I}, 15^{II}, 15^{III}, 15^{IV}, 17, 17^{I}, 17^{III}, 17^{IV}) verlaufen.

2. Antriebsaggregat (1, 1^{I}, 1^{II}, 1^{III} 1^{IV}, 1^{V}, 1^{VI}, 1^{VII}, 1^{VIII}, 1^{IX}) nach Anspruch 1,
**dadurch gekennzeichnet, dass**
wenigstens eines der Getriebe (19, 19^{I}, 19^{II}, 19^{III}, 19^{IV}, 21, 21^{I}, 21^{II}, 21^{III}) von einem Gehäuse (14, 14^{I}, 14^{II}) eingefasst ist, das für eine Montage an einem Randbereich, insbesondere in Längsrichtung, d. h. in einem linken Randbereich oder in einem rechten Randbereich, eines Kraftfahrzeugs gestaltet ist.

3. Antriebsaggregat (1, 1^{I}, 1^{II}, 1^{III} 1^{IV}, 1^{V}, 1^{VI}, 1^{VII}, 1^{VIII}, 1^{IX}) nach einem der vorhergehenden Ansprüche,
**dadurch gekennzeichnet, dass**
wenigstens eine der Radantriebswellen (27, 27^{I}, 27^{II}, 27^{III}, 27^{IV}, 27^{V}, 107, 107^{I}, 107^{II}, 108, 108^{I}, 108^{II}, 109) in wenigstens ein Gelenk (35, 35^{I}, 35^{II}, 35, 35^{I}, 35^{II}) ausmündet, vorzugsweise beide Radantriebswellen (27, 27^{I}, 27^{II}, 27^{III}, 27^{IV}, 27^{V}, 107, 107^{I}, 107^{II}, 108, 108^{I}, 108^{II}, 109) je in wenigstens ein Gelenk (35, 35^{I}, 35^{II}, 35, 35^{I}, 35^{II}) ausmünden, über welches oder über welche Antriebsdrehmomente auf an Seitenwellen (41, 41^{I}, 41^{II}, 43, 43^{I}, 43^{II}) anschließbare Straßenräder (29, 29^{I}, 29^{II}, 31, 31^{I}, 31^{II}) weiterleitbar sind.

4. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
beide Getriebe (19, 19^{I}, 19^{II}, 19^{III}, 19^{IV}, 21, 21^{I}, 21^{II}, 21^{III}) in einem gemeinsamen Gehäuse (14, 14^{I}, 14^{II}) eingehaust sind.

5. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
beide Elektromaschinen (3, 3^{I}, 3^{II}, 3^{III}, 3^{IV}, 5, 5^{I}, 5^{II}, 5^{III}, 5^{IV}) in einem gemeinsamen Gehäuse (4, 6) eingehaust sind.

6. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
das Planetengetriebe (68, 68^{I}, 69, 69^{I}, 71, 71^{I}, 71^{II}, 73, 73^{I}, 73^{II}, 131, 131^{I}, 133, 133^{I}) ein ortsfestes Hohlrad (81, 81^{I}, 81^{II}, 82, 82^{I}, 82^{II}, 117), z. B. fixiert an einem Gehäuse (4, 6, 14, 14^{I}, 14^{II}), hat, das einen Durchmesser aufweist,
der kleiner oder gleich groß ist wie ein Gehäusedurchmesser der dazugehörigen Elektromaschine (3, 3^{I}, 3^{II}, 3^{II}, 3^{IV}, 5, 5^{I}, 5^{II}, 5^{III}, 5^{IV}), wobei vorzugsweise an allen Abtriebsseiten (7, 9) ein solches Planetengetriebe (68, 68^{I}, 69, 69^{I}, 71, 71^{I}, 71^{II}, 73, 73^{I}, 73^{II}, 131, 131^{I}, 133, 133^{I}) angeschlossen ist,
und vorzugsweise wenigstens eines der Planetengetriebe, idealerweise je ein Planetengetriebe pro Elektromaschine, z. B. durch Festsetzen einzelner Getriebeelemente, schaltbar ist.

7. Antriebsaggregat (1, 1^{I}, 1^{II}, 1^{III} 1^{IV}, 1^{V}, 1^{VI}, 1^{VII}, 1^{VIII}, 1^{IX}) nach einem der vorhergehenden Ansprüche,
**dadurch gekennzeichnet, dass**
die Elektromaschinen (3, 3^{I}, 3^{II}, 3^{III}, 3^{IV}, 5, 5^{I}, 5^{II}, 5^{III}, 5^{IV}) für eine Montage im Kraftfahrzeug derart gestaltet sind, dass sie über einen mittleren Bereich, gesehen in Querrichtung durch das Kraftfahrzeug, hinausreichen.

8. Antriebsaggregat (1, 1^{I}, 1^{II}, 1^{III}, 1^{IV}, 1^{V}, 1^{VI}, 1^{VII}, 1^{VIII}, 1^{IX}) nach einem der Ansprüche 1 bis 7,
**dadurch gekennzeichnet, dass**
jede Elektromaschine (3, 3^{I}, 3^{II}, 3^{III}, 3^{IV}, 5, 5^{I}, 5^{II}, 5^{III}, 5^{IV}) wenigstens eines der Planetengetriebe (68, 68^{I}, 69, 69^{I}, 71, 71^{I}, 71^{II}, 73, 73^{I}, 73^{II}, 131, 131^{I}, 133, 133^{I}) hat und wenigstens eines der Planetengetriebe (68, 68^{I}, 69, 69^{I}, 71, 71^{I}, 71^{II}, 73, 73^{I}, 73^{II}, 131, 131^{I}, 133, 133^{I}) für eine Momentenweiterleitung,
eingeleitet über eine Sonne (75, 75^{I}, 75^{II}, 75^{III}, 77, 77^{I}, 77^{III}),
die von einer Welle (16, 18) der Elektromaschine (3, 3^{I}, 3^{II}, 3^{III}, 3^{IV}, 5, 5^{I}, 5^{II}, 5^{III}, 5^{IV}) antreibbar ist, und
ausgeleitet über einen Steg (79, 79^{I}, 79^{II}, 80, 80^{I}, 80^{II}) des Planetengetriebes (68, 68^{I}, 69, 69^{I}, 71, 71^{I}, 71^{II}, 73, 73^{I}, 73^{II}, 131, 131^{I}, 133, 133^{I}), auf eine Abtriebswelle (27, 27^{I}, 27^{II}, 107, 107^{I}, 107^{II}, 108, 108^{I}, 108^{II}, 109) gestaltet ist.

9. Antriebsaggregat (1, 1^{I}, 1^{II}, 1^{III}, 1^{IV}, 1^{V}, 1^{VI}, 1^{VII}, 1^{VIII}, 1^{IX}) nach einem der Ansprüche 1 bis 8,
**dadurch gekennzeichnet, dass**
wenigstens eines der Planetengetriebe (68, 68^{I}, 69, 69^{I}, 71, 71^{I}, 71^{II}, 73, 73^{I}, 73^{II}, 131, 131^{I}, 133, 133^{I}) für eine Übersetzung in einem Bereich von 3,0 bis 7,0, vorzugsweise von 3,0 bis 6,0, ausgestaltet ist,
vorzugsweise beide Planetengetriebe (68, 68^{I}, 69, 69^{I}, 71, 71^{I}, 71^{II}, 73, 73^{I}, 73^{II}, 131, 131^{I}, 133, 133^{I}) für eine Übersetzung in einem Bereich von 3,0 bis 7,0, vorzugsweise von 3,0 bis 6,0, ausgestaltet sind.

10. Antriebsaggregat (1, 1^{I}, 1^{II}, 1^{III}, 1^{IV}, 1^{V}, 1^{VI}, 1^{VII}, 1^{VIII}, 1^{IX}) nach einem der Ansprüche 1 bis 9,
**dadurch gekennzeichnet, dass**
wenigstens einem, vorzugsweise beiden, der Planetengetriebe (68, 68^{I}, 69, 69^{I}, 71, 71^{I}, 71^{II}, 73, 73^{I}, 73^{II}, 131, 131^{I}, 133, 133^{I}) ein, vorzugsweise jeweils ein, Stirnradpaar (101, 101^{I}, 101^{II}, 101^{III}, 102, 102^{I}, 102^{II}, 103, 103^{I}, 104, 104^{I}) nachgeschaltet ist,
das für eine Übersetzung in einem Bereich von 1,0 bis 4,5, insbesondere von 1,5 bis 3,5, ausgelegt ist.

11. Antriebsaggregat (1, 1^{I}, 1^{II}, 1^{III}, 1^{IV}, 1^{V}, 1^{VI}, 1^{VII}, 1^{VIII}, 1^{IX}) nach einem der Ansprüche 1 bis 10,
**dadurch gekennzeichnet, dass**
eine Gesamtübersetzung aller Zahnradstufen bzw. aller Zahnradübersetzungen, die in einem Momentenweg zwischen einer der Elektromaschinen (3, 3^{I}, 3^{II}, 3^{III}, 3^{IV}, 5, 5^{I}, 5^{II}, 5^{III}, 5^{IV}) und der daran, insbesondere indirekt, angeschlossenen Radantriebswelle (27, 27^{I}, 27^{II}, 27^{III}, 27^{IV}, 27^{V}, 107, 107^{I}, 107^{II}, 108, 108^{I}, 108^{II}, 109) eines einzelnen Straßenrads (29, 29^{I}, 29^{II}, 31, 31^{I}, 31^{II}) liegen, zwischen 1 und 31,5 beträgt.

12. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
zumindest eine der Elektromaschinen (3, 3^{I}, 3^{II}, 3^{III}, 3^{IV}, 5, 5^{I}, 5", 5^{III}, 5^{IV}), vorzugsweise alle Elektromaschinen (3, 3^{I}, 3^{II}, 3^{III}, 3^{IV}, 5, 5^{I}, 5^{II}, 5^{III}, 5^{IV}), für einen Drehzahlbereich von 10.000 Umdrehungen/Minute bis zu 35.000 Umdrehungen/Minute, vorzugsweise für einen Drehzahlbereich mit einer maximalen Drehzahl von wenigstens 13.000 Umdrehungen/Minute, ausgestaltet ist.

13. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
ein Verhältnis eines Rotordurchmessers (10, 10^{I}) zu einer Blechpaketlänge (129) bei wenigstens einer der Elektromaschinen (3, 3^{I}, 3^{II}, 3^{III}, 3^{IV}, 5, 5^{I}, 5^{II}, 5^{III}, 5^{IV}) in einem Bereich von 2 bis 0,25, insbesondere in einem Bereich von 1,5 bis 0,4, vorzugsweise in einem Bereich von 1,0 bis 0,4 oder von 1,0 bis 0,5, liegt.

14. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
die Antriebsachse (15, 15^{I}, 15^{II}, 15^{III}, 15^{IV}, 17, 17^{I}, 17^{III}, 17^{IV}) einer der Elektromaschinen (3, 3^{I}, 3^{II}, 3^{III}, 3^{IV}, 5, 5^{I}, 5^{II}, 5^{III}, 5^{IV}) mit der Antriebswelle (16, 18) der gleichen Elektromaschine (3, 3^{I}, 3^{II}, 3^{III}, 3^{IV}, 5, 5^{I}, 5^{II}, 5^{III}, 5^{IV}) zusammenfällt.

15. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
eine Leistungsübertragung von einer der Antriebsachsen (15, 15^{I}, 15^{II}, 15^{II}, 15^{IV}, 17, 17^{I}, 17^{III}, 17^{IV}) auf die Radantriebswelle (27, 27^{I}, 27^{II}) über eine einstufige Zahnradübertragung erfolgt,
wodurch insbesondere anhand von Durchmessern von Zahnrädern (101, 101^{I}, 101", 101^{III}, 102, 102^{I}, 102^{II}, 103, 103^{I}, 104, 104^{I}) der Zahnradübertragung ein Abstand zwischen Antriebsachse und Radantriebswelle festgelegt ist.

16. Antriebsaggregat (1, 1^{I}, 1^{II}, 1^{III}, 1^{IV}, 1^{V}, 1^{VI}, 1^{VII}, 1^{VIII}, 1^{IX}) nach einem der vorhergehenden Ansprüche,
**dadurch gekennzeichnet, dass**
die erste Elektromaschine (3, 3^{I}, 3^{II}, 3^{III}, 3^{IV}) eine erste Antriebsachse (15, 15^{I}, 15^{II}, 15^{II}, 15^{IV}) und die zweite Elektromaschine (5, 5^{I}, 5^{II}, 5^{III}, 5^{IV}) eine zweite Antriebsachse (17, 17^{I}, 17^{III}, 17^{IV}) aufweist,
wobei die Elektromaschinen (3, 3^{I}, 3^{II}, 3^{III}, 3^{IV}; 5, 5^{I}, 5^{II}, 5^{III}, 5^{IV}) vorzugsweise baugleichen Typs sind und ihre Antriebsachsen (15, 15^{I}, 15^{II}, 15^{II}, 15^{IV}; 17, 17^{I}, 17^{III}, 17^{IV}) voneinander beabstandet verlaufen und
wobei insbesondere parallel zu den Antriebsachsen (15, 15^{I}, 15^{II}, 15^{II}, 15^{IV}; 17, 17^{I}, 17^{III}, 17^{IV}) die Radantriebswellen (27, 27^{I}, 27^{II}, 27^{III}, 27^{IV}, 27^{V}, 107, 107^{I}, 107^{II}, 108, 108^{I}, 108^{II}, 109) verlaufen, die vorzugsweise koaxial zueinander angeordnet sind.

## Claims

1. Drive unit (1, 1^{I}, 1^{II}, 1^{III}, 1^{IV}, 1^{V}, 1^{VI}, 1^{VII}, 1^{VIII}, 1^{IX})
comprising a first electric machine (3, 3^{I}, 3^{II}, 3^{III}, 3^{IV}) and a second electric machine (5, 5^{I}, 5^{II}, 5^{III}, 5^{IV}),
which have an output side (7, 9) and a winding region (11, 13),
for providing drive to road wheels, like a single-wheel drive, on one and the same axle of a motor vehicle,
wherein each of the electric machines (3, 3^{I}, 3^{II}, 3^{III}, 3^{IV}; 5, 5^{I}, 5^{II}, 5^{III}, 5^{IV}), which is equipped with a drive axle (15, 15^{II}, 15^{II}, 15^{III}, 15^{IV}, 17, 17^{I}, 17^{III}, 17^{IV}), has a drive shaft (16, 18),
via which a drive torque can be introduced into a first transmission (19, 19^{I}, 19^{II}, 19^{III}, 19^{IV}),
which is drivable by the first electric machine (3, 3^{I}, 3^{II}, 3^{III}, 3^{IV}),
and a drive torque can be introduced into a second transmission (21, 21^{I}, 21^{II}, 21^{III}), which is drivable by the second electric machine (5, 5^{I}, 5^{II}, 5^{III}, 5^{IV}),
wherein the drive axles (15, 15^{II}, 15^{II}, 15^{III}, 15^{IV}, 17, 17^{I}, 17^{III}, 17^{IV}) extend parallel to one another, but offset from one another,
**characterized in that**
the two electric machines (3, 3^{I}, 3^{II}, 3^{III}, 3^{IV}, 5, 5^{I}, 5^{II}, 5^{III}, 5^{IV}), at least with regard to the winding regions (11, 13) thereof, are arranged in an at least partially overlapping manner and for installation in an installation space of a vehicle, in which the winding regions (11, 13) are to be located between a first side member delimiting the installation space and a second side member delimiting the installation space, in a manner aligned along a longitudinal axis of the vehicle,
wherein a planetary gear set (68, 68^{I}, 69, 69^{I}, 71, 71^{I}, 71^{II}, 73, 73^{I}, 73^{II}, 131, 131^{I}, 133, 133^{I}) is connected to at least one output side (7, 9) of one of the electric machines (3, 3^{I}, 3^{II}, 3^{III}, 3^{IV}; 5, 5^{I}, 5^{II}, 5^{III}, 5^{IV}), which are designed to transmit driving power to two wheel drive shafts (27, 27^{I}, 27^{II}, 27^{III}, 27^{IV}, 27^{V}, 107, 107^{I}, 107^{II}, 108, 108^{I}, 108^{II}, 109), said planetary gear set reducing the speed of the electric machine (3, 3^{I}, 3^{II}, 3^{III}, 3^{IV}; 5, 5^{I}, 5^{II}, 5^{III}, 5^{IV}) that is applied to one of the road wheels (29, 29^{I}, 29^{II}, 31, 31^{I}, 31^{II}),
wherein the wheel drive shafts (27, 27^{I}, 27^{II}, 27^{III}, 27^{IV}, 27^{V}, 107, 107^{I}, 107^{II}, 108, 108^{I}, 108^{II}, 109), which are each part of a transmission (19, 19^{I}, 19^{II}, 19^{III}, 19^{IV}; 21, 21^{I}, 21", 21^{III}), extend between the drive axles (15, 15^{I}, 15^{II}, 15^{III}, 15^{IV}, 17, 17^{I}, 17^{III}, 17^{IV}).

2. Drive unit (1, 1^{I}, 1^{II}, 1^{III}, 1^{IV}, 1^{V}, 1^{VI}, 1^{VII}, 1^{VIII}, 1^{IX}) according to claim 1,
**characterized in that**
at least one of the transmissions (19, 19^{I}, 19^{II}, 19^{III}, 19^{IV}, 21, 21^{II}, 21^{II}, 21^{III}) is surrounded by a housing (14, 14^{I}, 14^{II}), which is designed to be mounted on a peripheral region, in particular in a longitudinal direction, i.e. in a left-hand peripheral region or in a right-hand peripheral region, of a motor vehicle.

3. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
at least one of the wheel drive shafts (27, 27^{I}, 27^{II}, 27^{III}, 27^{IV}, 27^{V}, 107, 107^{I}, 107^{II}, 108, 108^{I}, 108^{II}, 109) leads to at least one joint (35, 35^{I}, 35^{II}, 35, 35', 35"),
preferably both wheel drive shafts (27, 27^{I}, 27^{II}, 27^{III}, 27^{IV}, 27^{V}, 107, 107^{I}, 107^{II}, 108, 108^{I}, 108", 109) each leads to at least one joint (35, 35^{I}, 35^{II}, 35, 35', 35"),
via which drive torques can be transmitted to road wheels (29, 29^{I}, 29^{II}, 31, 31^{I}, 31^{II}) that can be connected to side shafts (41, 41', 41^{II}, 43, 43^{I}, 43^{II}).

4. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
both transmissions (19, 19^{I}, 19^{II}, 19^{III}, 19^{IV}, 21, 21^{I}, 21^{II}, 21^{III}) are housed in a common housing (14, 14^{I}, 14^{II}).

5. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
both electric machines (3, 3^{I}, 3^{II}, 3^{III}, 3^{IV}, 5, 5^{I}, 5^{II}, 5^{III}, 5^{IV}) are housed in a common housing (4, 6).

6. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
the planetary gear set (68, 68^{I}, 69, 69', 71, 71^{I}, 71", 73, 73', 73^{II}, 131, 131^{I}, 133, 133^{I}) has
a stationary ring gear (81, 81^{I}, 81^{II}, 82, 82^{I}, 82^{II}, 117), for example fixed to a housing (4, 6, 14, 14^{I}, 14^{II}), said ring gear having a diameter
which is smaller than or equal to a housing diameter of the associated electric machine (3, 3^{I}, 3^{II}, 3^{III}, 3^{IV}, 5, 5^{I}, 5^{II}, 5^{III}, 5^{IV}), wherein preferably one such planetary gear set (68, 68', 69, 69', 71, 71', 71^{II}, 73, 73', 73^{II}, 131, 131^{I}, 133, 133^{I}) is connected to all output sides (7, 9),
and preferably at least one of the planetary gear sets, ideally one planetary gear set per electric machine, is shiftable, for example by locking individual gear elements.

7. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
the electric machines (3, 3^{I}, 3^{II}, 3^{III}, 3^{IV}, 5, 5^{I}, 5^{II}, 5^{III}, 5^{IV}) are designed to be mounted in the motor vehicle in such a way that they extend beyond a middle region, as seen in the transverse direction through the vehicle.

8. Drive unit (1, 1^{I}, 1^{II}, 1^{III}, 1^{IV}, 1^{V}, 1^{VI}, 1^{VII}, 1^{VIII}, 1^{IX}) according to any one of claims 1 to 7,
**characterized in that**
each electric machine (3, 3^{I}, 3^{II}, 3^{III}, 3^{IV}, 5, 5^{I}, 5^{II}, 5^{III}, 5^{IV}) has at least one of the planetary gear sets (68, 68^{I}, 69, 69^{I}, 71, 71^{I}, 71^{II}, 73, 73^{I}, 73^{II}, 131, 131^{I}, 133, 133^{I}) and at least one of the planetary gear sets (68, 68^{I}, 69, 69^{I}, 71, 71^{I}, 71^{II}, 73, 73^{I}, 73^{II}, 131, 131^{I}, 133, 133^{I}) is designed to transmit torque to an output shaft (27, 27^{I}, 27^{II}, 107, 107^{I}, 107^{II}, 108, 108^{I}, 108^{II}, 109), said torque being
introduced via a sun gear (75, 75^{I}, 75^{II}, 75^{III}, 77, 77^{I}, 77^{III}),
which can be driven by a shaft (16, 18) of the electric machine (3, 3^{I}, 3^{II}, 3^{III}, 3^{IV}, 5, 5^{I}, 5^{II}, 5^{III}, 5^{IV}), and
transferred to the output via a carrier (79, 79^{I}, 79^{II}, 80, 80^{I}, 80^{II}) of the planetary gear set (68, 68', 69, 69', 71, 71^{I}, 71^{II}, 73, 73', 73^{II}, 131, 131^{I}, 133, 133^{I}).

9. Drive unit (1, 1^{I}, 1^{II}, 1^{III}, 1^{IV}, 1^{V}, 1^{VI}, 1^{VII}, 1^{VIII}, 1^{IX}) according to any one of claims 1 to 8,
**characterized in that**
at least one of the planetary gear sets (68, 68^{I}, 69, 69^{I}, 71, 71^{I}, 71^{II}, 73, 73^{I}, 73^{II}, 131, 131', 133, 133^{I}) is designed for a transmission ratio in a range from 3.0 to 7.0, preferably from 3.0 to 6.0,
preferably both planetary gear sets (68, 68^{I}, 69, 69^{I}, 71, 71^{I}, 71", 73, 73', 73", 131, 131', 133, 133^{I}) are designed for a transmission ratio in a range from 3.0 to 7.0, preferably from 3.0 to 6.0.

10. Drive unit (1, 1^{I}, 1^{II}, 1^{III}, 1^{IV}, 1^{V}, 1^{VI}, 1^{VII}, 1^{VIII}, 1^{IX}) according to any one of claims 1 to 9,
**characterized in that**
a spur gear pair (101, 101', 101", 101^{III}, 102, 102^{I}, 102", 103, 103^{I}, 104, 104^{I}), preferably a respective spur gear pair, is arranged downstream of at least one, preferably both, of the planetary gear sets (68, 68^{I}, 69, 69^{I}, 71, 71^{I}, 71^{II}, 73, 73^{I}, 73^{II}, 131, 131^{I}, 133, 133'),
said spur gear pair being designed for a transmission ratio in a range from 1.0 to 4.5, in particular from 1.5 to 3.5.

11. Drive unit (1, 1^{I}, 1^{II}, 1^{III}, 1^{IV}, 1^{V}, 1^{VI}, 1^{VII}, 1^{VIII}, 1^{IX}) according to any one of claims 1 to 10,
**characterized in that**
a total transmission ratio of all gear stages or of all gear transmissions located in a torque path between one of the electric machines (3, 3^{I}, 3^{II}, 3^{III}, 3^{IV}, 5, 5^{I}, 5^{II}, 5^{III}, 5^{IV}) and the wheel drive shaft (27, 27', 27^{II}, 27^{III}, 27^{IV}, 27^{V}, 107, 107^{I}, 107^{II}, 108, 108^{I}, 108", 109) of an individual road wheel (29, 29^{I}, 29^{II}, 31, 31^{I}, 31^{II}) that is connected thereto, in particular indirectly, is between 1 and 31.5.

12. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
at least one of the electric machines (3, 3^{I}, 3^{II}, 3^{III}, 3^{IV}, 5, 5^{I}, 5^{II}, 5^{III}, 5^{IV}), preferably all the electric machines (3, 3^{I}, 3^{II}, 3^{III}, 3^{IV}, 5, 5^{I}, 5^{II}, 5^{III}, 5^{IV}), is designed for a speed range of from 10,000 revolutions per minute to 35,000 revolutions per minute, preferably for a speed range having a maximum speed of at least 13,000 revolutions per minute.

13. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
a ratio of a rotor diameter (10, 10^{I}) to a lamination stack length (129) in the case of at least one of the electric machines (3, 3^{I}, 3^{II}, 3^{III}, 3^{IV}, 5, 5^{I}, 5^{II}, 5^{III}, 5^{IV}) lies in a range from 2 to 0.25, in particular in a range from 1.5 to 0.4, preferably in a range from 1.0 to 0.4 or from 1.0 to 0.5.

14. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
the drive axle (15, 15^{II}, 15^{II}, 15^{III}, 15^{IV}, 17, 17^{I}, 17^{III}, 17^{IV}) of one of the electric machines (3, 3^{I}, 3^{II}, 3^{III}, 3^{IV}, 5, 5^{I}, 5^{II}, 5^{III}, 5^{IV}) coincides with the drive shaft (16, 18) of the same electric machine (3, 3^{I}, 3^{II}, 3^{III}, 3^{IV}, 5, 5^{I}, 5^{II}, 5^{III}, 5^{IV}).

15. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
a transmission of power from one of the drive axles (15, 15^{I}, 15^{II}, 15^{III}, 15^{IV}, 17, 17^{I}, 17^{III}, 17^{IV}) to the wheel drive shaft (27, 27', 27") takes place via a single-stage gear transmission,
as a result of which in particular a distance between the drive axle and the wheel drive shaft is defined on the basis of diameters of gears (101, 101^{I}, 101^{II}, 101^{III}, 102, 102^{I}, 102^{II}, 103, 103^{I}, 104, 104^{I}) of the gear transmission.

16. Drive unit (1, 1^{I}, 1^{II}, 1^{III}, 1^{IV}, 1^{V}, 1^{VI}, 1^{VII}, 1^{VIII}, 1^{IX}) according to any one of the preceding claims,
**characterized in that**
the first electric machine (3, 3^{I}, 3^{II}, 3^{III}, 3^{IV}) has a first drive axle (15, 15^{I}, 15^{II}, 15^{III}, 15^{IV}) and the second electric machine (5, 5^{I}, 5", 5^{III}, 5^{IV}) has a second drive axle (17, 17^{I}, 17^{III}, 17^{IV}),
wherein the electric machines (3, 3^{I}, 3^{II}, 3^{III}, 3^{IV}; 5, 5^{I}, 5^{II}, 5^{III}, 5^{IV}) are preferably of an identical type and the drive axles (15, 15^{I}, 15^{II}, 15^{III}, 15^{IV}; 17, 17^{I}, 17^{III}, 17^{IV}) thereof extend at a distance from one another, and
wherein in particular the wheel drive shafts (27, 27^{I}, 27^{II}, 27^{III}, 27^{IV}, 27^{V}, 107, 107^{I}, 107^{II}, 108, 108^{I}, 108^{II}, 109) extend parallel to the drive axles (15, 15^{I}, 15^{II}, 15^{III}, 15^{IV}; 17, 17^{I}, 17^{III}, 17^{IV}), said wheel drive shafts preferably being arranged coaxial with one another.

## Revendications

1. Groupe moteur (1, 1^{I}, 1^{II}, 1^{III}, 1^{IV}, 1^{V}, 1^{VI}, 1^{VII}, 1^{VIII}, 1^{IX}) avec un premier moteur électrique (3, 3^{I}, 3^{II}, 3^{III}, 3^{IV}) et un second moteur électrique (5, 5^{I}, 5^{II}, 5^{III}, 5^{IV}) qui ont un côté sortie (7, 9) et une zone d'enroulement (11, 13), pour une puissance motrice sur roues, comme un entraînement de roue indépendante, sur un même axe d'un véhicule automobile, cependant que chacun des moteurs électriques (3, 3^{I}, 3^{II}, 3^{III}, 3^{IV} ; 5, 5^{I}, 5^{II}, 5^{III}, 5^{IV}), équipé d'un essieu moteur (15, 15^{I}, 15^{II}, 15^{III}, 15^{IV}, 17, 17^{I}, 17^{III}, 17^{IV}), présente un arbre d'entraînement (16, 18) par lequel un couple moteur peut être introduit respectivement dans une première transmission (19, 19^{I}, 19^{II}, 19^{III}, 19^{IV}) en pouvant être entraîné par le premier moteur électrique (3, 3^{I}, 3^{II}, 3^{III}, 3^{IV}) et dans une seconde transmission (21, 21^{I}, 21^{II}, 21^{III}) en pouvant être entraîné par le second moteur électrique (5, 5^{I}, 5^{II}, 5^{III}, 5^{IV}), cependant que les essieux moteurs (15, 15^{I}, 15^{II}, 15^{II}, 15^{IV}, 17, 17^{I}, 17^{III}, 17^{IV}) sont parallèles mais en étant décalés l'un par rapport à l'autre,
**caractérisé en ce que**
les deux moteurs électriques (3, 3^{I}, 3^{II}, 3^{III}, 3^{IV} ; 5, 5^{I}, 5^{II}, 5^{III}, 5^{IV}) sont placés au moins par rapport à leurs zones d'enroulement (11, 13) d'une manière qui se chevauche au moins partiellement et pour un montage dans un espace d'installation d'un véhicule dans lequel les zones d'enroulement (11, 13) doivent être logées en étant alignées le long d'un axe longitudinal du véhicule automobile entre un premier longeron qui délimite l'espace d'installation et un second longeron qui délimite l'espace d'installation, cependant qu'un engrenage planétaire (68, 68^{I}, 69, 69^{I}, 71, 71^{I}, 71^{II}, 73, 73^{I}, 73^{II}, 131, 131^{I}, 133, 133^{I}) est raccordé à au moins un côté sortie (7, 9) de l'un des moteurs électriques (3, 3^{I}, 3^{II}, 3^{III}, 3^{IV} ; 5, 5^{I}, 5^{II}**,** 5^{III}, 5^{IV}), qui sont agencés pour une transmission de la puissance motrice à deux arbres d'entraînement de roue (27, 27^{I}, 27^{II}, 27^{III}, 27^{IV}, 27^{V}, 107, 107^{I}, 107^{II}, 108, 108^{I}, 108^{II}, 109), engrenage planétaire qui réduit la vitesse du moteur électrique (3, 3^{I}, 3^{II}, 3^{III}, 3^{IV} ; 5, 5^{I}, 5^{II}, 5^{III}, 5^{IV}) appliquée à l'une des roues (29, 29^{I}, 29^{II}, 31, 31^{I}, 31^{II}), cependant que les arbres d'entraînement de roue (27, 27', 27^{II}, 27^{III}, 27^{IV}, 27^{V}, 107, 107^{I}, 107^{II}, 108, 108^{I}, 108^{II}, 109), qui sont chacun une partie d'une transmission (19, 19^{I}, 19^{II}, 19^{III}, 19^{IV} ,21, 21^{I}, 21^{II}, 21^{III}), s'étendent entre les essieux moteurs (15, 15^{II}, 15^{II}, 15^{III}, 15^{IV}, 17, 17^{I}, 17^{III}, 17^{IV}).

2. Groupe moteur (1, 1^{I}, 1^{II}, 1^{III}, 1^{IV}, 1^{V}, 1^{VI}, 1^{VII}, 1^{VIII}, 1^{IX}) selon la revendication 1, **caractérisé en ce qu'**au moins l'une des transmissions (19, 19^{I}, 19^{II}, 19^{III}, 19^{IV} ,21, 21^{I}, 21^{II}, 21^{III}) est enserrée par un carter (14, 14^{I}, 14^{II}) qui est configuré pour un montage dans une zone marginale, en particulier dans le sens longitudinal, c'est-à-dire dans une zone marginale gauche ou dans une zone marginale droite, d'un véhicule automobile.

3. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce qu'**au moins l'un des arbres d'entraînement de roue (27, 27', 27^{II}, 27^{III}, 27^{IV}, 27^{V}, 107, 107^{I}, 107^{II}, 108, 108^{I}, 108^{II}, 109) débouche dans au moins une articulation (35, 35^{I}, 35^{II}, 35, 35^{I}, 35^{II}), de préférence les deux arbres d'entraînement de roue (27, 27^{I}, 27^{II}, 27^{III}, 27^{IV}, 27^{V}, 107, 107^{I}, 107^{II}, 108, 108^{I}, 108^{II}, 109) débouchent chacun dans au moins une articulation (35, 35^{I}, 35^{II}, 35, 35^{I}, 35^{II}) par laquelle ou par lesquelles des couples moteurs peuvent être transmis à des roues (29, 29^{I}, 29^{II}, 31, 31^{I}, 31^{II}) qui peuvent être raccordées aux arbres latéraux (41, 41^{I}, 41^{II}, 43, 43^{I}, 43^{II}).

4. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce que** les deux transmissions (19, 19^{I}, 19^{II}, 19^{III}, 19^{IV} ,21, 21^{I}, 21^{II}, 21^{III}) sont logées dans un carter commun (14, 14^{I}, 14^{II}).

5. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce que** les deux moteurs électriques (3, 3^{I}, 3^{II}, 3^{III}, 3^{IV} ; 5, 5^{I}, 5^{II}, 5^{III}, 5^{IV}) sont logés dans un carter commun (4, 6).

6. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce que** l'engrenage planétaire (68, 68^{I}, 69, 69^{I}, 71, 71^{I}, 71^{II}, 73, 73', 73", 131, 131^{I}, 133, 133^{I}) présente une roue à denture intérieure stationnaire (81, 81^{I}, 81^{II}, 82, 82^{I}, 82^{II}, 117), par exemple fixée à un carter (4, 6, 14, 14^{I}, 14^{II}), qui a un diamètre qui est inférieur ou égal à un diamètre du carter du moteur électrique associé (3, 3^{I}, 3", 3^{III}, 3^{IV} ; 5, 5^{I}, 5^{II}, 5^{III}, 5^{IV}), cependant qu'un tel engrenage planétaire (68, 68^{I}, 69, 69^{I}, 71, 71^{I}, 71^{II}, 73, 73^{I}, 73^{II}, 131, 131^{I}, 133, 133^{I}) est de préférence raccordé à tous les côtés sortie (7, 9) et que de préférence au moins l'un des engrenages planétaires peut être commuté, de manière idéale un engrenage planétaire par moteur électrique, par exemple par fixation d'éléments de transmission individuels.

7. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce que** les moteurs électriques (3, 3^{I}, 3^{II}, 3^{III}, 3^{IV} ; 5, 5^{I}, 5^{II}, 5^{III}, 5^{IV}) sont configurés pour un montage dans le véhicule automobile de telle manière qu'ils s'étendent au-delà d'une zone médiane, ceci étant vu dans le sens transversal à travers le véhicule automobile.

8. Groupe moteur (1, 1^{I}, 1^{II}, 1^{III}, 1^{IV}, 1^{V}, 1^{VI}, 1^{VII}, 1^{VIII}, 1^{IX}) selon l'une des revendications 1 à 7, **caractérisé en ce que** chaque moteur électrique (3, 3^{I}, 3^{II}, 3^{III}, 3^{IV} ; 5, 5^{I}, 5^{II}, 5^{III}, 5^{IV}) a au moins l'un des engrenages planétaires (68, 68^{I}, 69, 69^{I}, 71, 71^{I}, 71^{II}, 73, 73^{I}, 73^{II}, 131, 131', 133, 133^{I}) et au moins l'un des engrenages planétaires (68, 68^{I}, 69, 69^{I}, 71, 71^{I}, 71^{II}, 73, 73^{I}, 73^{II}, 131, 131^{I}, 133, 133^{I}) est agencé pour une transmission de couple, introduit par un soleil (75, 75^{I}, 75^{II}, 75^{III}, 77, 77^{I}, 77^{III}) qui peut être entraîné par un arbre (16, 18) du moteur électrique (3, 3^{I}, 3^{II}, 3^{III}, 3^{IV} ; 5, 5^{I}, 5^{II}, 5^{III}, 5^{IV}) et sorti sur un arbre de sortie (27, 27^{I}, 27^{II}, 107, 107^{I}, 107^{II}, 108, 108^{I}, 108^{II}, 109) par une entretoise (79, 79^{I}, 79^{II}, 80, 80^{I}, 80^{II}) de l'engrenage planétaire (68, 68^{I}, 69, 69^{I}, 71, 71^{I}, 71^{II}, 73, 73^{I}, 73^{II}, 131, 131', 133, 133').

9. Groupe moteur (1, 1^{I}, 1^{II}, 1^{III}, 1^{IV}, 1^{V}, 1^{VI}, 1^{VII}, 1^{VIII}, 1^{IX}) selon l'une des revendications 1 à 8, **caractérisé en ce qu'**au moins l'un des engrenages planétaires (68, 68^{I}, 69, 69^{I}, 71, 71^{I}, 71^{II}, 73, 73', 73", 131, 131^{I}, 133, 133^{I}) est agencé pour une transmission dans une plage de 3,0 à 7,0, de préférence de 3,0 à 6,0, de préférence les deux engrenages planétaires (68, 68^{I}, 69, 69^{I}, 71, 71^{I}, 71^{II}, 73, 73^{I}, 73^{II}, 131, 131^{I}, 133, 133^{I}) sont agencés pour une transmission dans une plage de 3,0 à 7,0, de préférence de 3,0 à 6,0.

10. Groupe moteur (1, 1^{I}, 1^{II}, 1^{III}, 1^{IV}, 1^{V}, 1^{VI}, 1^{VII}, 1^{VIII}, 1^{IX}) selon l'une des revendications 1 à 9, **caractérisé en ce qu'**une paire, de préférence à chaque fois une paire de roues droites (101, 101^{I}, 101^{II}, 101^{III}, 102, 102^{I}, 102^{II}, 103, 103^{I}, 104, 104^{I}), qui est conçue pour une transmission dans une plage de 1,0 à 4,5, en particulier de 1,5 à 3,5, est placée en aval respectivement d'au moins l'un, de préférence de chacun des deux engrenages planétaires (68, 68^{I}, 69, 69^{I}, 71, 71^{I}, 71^{II}, 73, 73^{I}, 73^{II}, 131, 131^{I}, 133, 133^{I}).

11. Groupe moteur (1, 1^{I}, 1^{II}, 1^{III}, 1^{IV}, 1^{V}, 1^{VI}, 1^{VII}, 1^{VIII}, 1^{IX}) selon l'une des revendications 1 à 10, **caractérisé en ce qu'**une transmission totale de tous les étages d'engrenage ou de toutes les transmissions de roues dentées qui se situent dans une trajectoire de couple entre l'un des moteurs électriques (3, 3^{I}, 3^{II}, 3^{III}, 3^{IV} ; 5, 5^{I}, 5^{II}, 5^{III}, 5^{IV}) et l'arbre d'entraînement de roue (27, 27^{I}, 27^{II}, 27^{III}, 27^{IV}, 27^{V}, 107, 107^{I}, 107^{II}, 108, 108^{I}, 108^{II}, 109) qui lui est raccordé, en particulier de manière indirecte, d'une roue individuelle (29, 29^{I}, 29^{II}, 31, 31^{I}, 31^{II}) est entre 1 et 31,5.

12. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce qu'**au moins l'un des moteurs électriques (3, 3^{I}, 3^{II}, 3^{III}, 3^{IV} ; 5, 5^{I}, 5^{II}, 5^{III}, 5^{IV}), de préférence tous les moteurs électriques (3, 3^{I}, 3^{II}, 3^{III}, 3^{IV}; 5, 5^{I}, 5^{II}, 5^{III}, 5^{IV}) sont configurés pour une plage de nombres de tours de 10000 tours/minutes à 35000 tours/minute, de préférence pour une plage de nombre de tours avec un nombre maximal de tours d'au moins 13000 tours/minute.

13. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce qu'**un rapport d'un diamètre de rotor (10, 10') à une longueur d'empilage de tôle (129) se situe, pour au moins l'un des moteurs électriques (3, 3^{I}, 3^{II}, 3^{III}, 3^{IV}; 5, 5^{I}, 5^{II}, 5^{III}, 5^{IV}), dans une plage de 2 à 0,25, en particulier dans une plage de 1,5 à 0,4, de préférence dans une plage de 1,0 à 0,4 ou de 1,0 à 0,5.

14. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce que** l'essieu moteur (15, 15^{I}, 15^{II}, 15^{III}, 15^{IV}, 17, 17^{I}, 17^{III}, 17^{IV}) d'un des moteurs électriques (3, 3^{I}, 3^{II}, 3^{III}, 3^{IV}; 5, 5^{I}, 5^{II}, 5^{III}, 5^{IV}) coïncide avec l'arbre d'entraînement (16, 18) du même moteur électrique (3, 3^{I}, 3^{II}, 3^{III}, 3^{IV}; 5, 5^{I}, 5^{II}, 5^{III}, 5^{IV}).

15. Groupe moteur (1, 1^{I}, 1^{II}, 1^{III}, I^{IV}, 1^{V}, 1^{VI}, 1^{VII}, 1^{VIII}, 1^{IX}) selon l'une des revendications précédentes, **caractérisé en ce qu'**un transfert de puissance de l'un des essieux moteurs (15, 15^{I}, 15^{II}, 15^{III}, 15^{IV}, 17, 17^{I}, 17^{III}, 17^{IV}) à l'arbre d'entraînement de roue (27, 27^{I}, 27^{II}) se fait par une transmission par engrenage à un étage si bien qu'un écart entre l'essieu moteur et l'arbre d'entraînement de roue est fixé en particulier à l'aide de diamètres des roues à denture droite (101, 101^{I}, 101^{II}, 101^{III}, 102, 102^{I}, 102^{II}, 103, 103^{I}, 104, 104^{I}) de la transmission par engrenage.

16. Groupe moteur (1, 1^{I}, 1^{II}, 1^{III}, 1^{IV}, 1^{V}, 1^{VI}, 1^{VII}, 1^{VIII}, 1^{IX}) selon l'une des revendications précédentes, **caractérisé en ce que** le premier moteur électrique (3, 3^{I}, 3^{II}, 3^{III}, 3^{IV}) présente un premier essieu moteur (15, 15^{I}, 15^{II}, 15^{III}, 15^{IV}) et le second moteur électrique (5, 5^{I}, 5^{II}, 5^{III}, 5^{IV}) un second essieu moteur (17, 17^{I}, 17^{III}, 17^{IV}), cependant que les moteurs électriques (3, 3^{I}, 3^{II}, 3^{III}, 3^{IV}; 5, 5^{I}, 5^{II}, 5^{III}, 5^{IV}) sont de préférence de même type et leurs essieux moteurs (15, 15^{I}, 15^{II}, 15^{III}, 15^{IV}, 17, 17^{I}, 17^{III}, 17^{IV}) sont espacés l'un de l'autre et cependant que les arbres d'entraînement de roue (27, 27^{I}, 27^{II}, 27^{III}, 27^{IV}, 27^{V}, 107, 107^{I}, 107^{II}, 108, 108^{I}, 108^{II}, 109), qui sont placés de préférence de manière coaxiale les uns par rapport aux autres, s'étendent en particulier parallèlement aux essieux moteurs (15, 15^{I}, 15^{II}, 15^{III}, 15^{IV}, 17, 17^{I}, 17^{III}, 17^{IV}).
